# EUROPEAN PATENT APPLICATION

(11) **EP 3 378 684 A1**
(43) Date of publication of application: **26.09.2018**
(21) Application number: 16866017.3
(22) Date of filing: 20.09.2016
(51) Int. Cl.: B60G 23/00, B60G 17/015, B60G 17/04

(54) **SUSPENSION DEVICE**

(30) Priority: 19.11.2015 JP 2015226992
(71) Applicant: KYB Corporation, Tokyo 105-6111 (JP)
(72) Inventor: MASAMURA, Tatsuya, Tokyo 105-6111 (JP)
(74) Representative: MFG Patentanwälte Meyer-Wildhagen Meggle-Freund Gerhard PartG mbB
(86) International application number: PCT/JP2016/077662
(87) International publication number: WO 2017/086014

(57) **Abstract**

A suspension device (S) which is a means for solving the problem of the present invention includes an actuator (AC) movable in a telescopic manner, a pump (4), a liquid pressure circuit (FC) provided between the actuator (AC) and the pump (4) and supplying a liquid discharged from the pump (4) to the actuator (AC) so that the actuator (AC) expands and contracts, and a controller (C) controlling the driving of the pump (4), in which the pump (4) is controlled by obtaining a target rotation number of the pump (4) on the basis of road surface displacement detected by a preview sensor (41).

## Description

### Technical Field

The present invention relates to a suspension device.

### Background Art

As this kind of suspension device, for example, as disclosed in JP S63176710 A, a suspension device which serves as an active suspension interposed between an axle and a vehicle body of a vehicle is known. Specifically, the suspension device includes an actuator which includes a cylinder, a piston movably inserted into the cylinder and defining a pressure chamber inside the cylinder, and a rod connected to the piston, a hydraulic pump which is driven by an engine of the vehicle at all times, an oil passage which connects the hydraulic pump and the pressure chamber inside the cylinder, a pressure control valve which is provided in the course of the oil passage and controls a pressure inside the pressure chamber, and a posture change suppression control device which controls the pressure control valve.

### Summary of the Invention

The above-described suspension device cannot be directly mounted on a hybrid electric vehicle (HEV) having an engine stop mode.

Here, a method of driving the hydraulic pump by power of a motor which is a driving source of the HEV or electric vehicle (EV) is supposed. However, in the conventional suspension device, since the hydraulic pump is continuously driven during control, the discharge flow quantity of the hydraulic pump is designed not to be insufficient even when the actuator expands and contracts with a large amplitude and at high speed at the time of running on a rough road or the like. For that reason, since the conventional suspension device has high energy consumption in the hydraulic pump and has severe power consumption, it is difficult to apply the suspension device to the HEV or EV.

The present invention has been made to solve the above-described problems, and an object of the present invention is to provide a suspension device which can be mounted on an HEV or EV with low energy consumption.

For that reason, a suspension device of the present invention includes an actuator, a pump, a liquidpressure circuit provided between the actuator and the pump and supplying a liquid discharged from the pump to the actuator so that the actuator expands and contracts, and a controller controlling the driving of the pump, in which a road surface condition index is obtained on the basis of road surface displacement detected by a preview sensor and a target rotation number is obtained on the basis of the road surface condition index.

### Effects of the Invention

According to the suspension device of the present invention, the suspension device can be mounted on an HEV or EV with low energy consumption. Further, according to the suspension control device, the suspension device can be applied to the HEV or EV while energy consumption of a pump is suppressed.

### Brief Description of Drawings

Fig. 1 is a diagram illustrating a basic configuration of a suspension device of the present invention.
Fig. 2 is a diagram illustrating a configuration example of a controller of the suspension device of the present invention.
Fig. 3 is a diagram illustrating a state in which the suspension device of the present invention is applied to a vehicle.
Fig. 4 is a diagram illustrating a process of acquiring a road surface condition index in a road surface condition index acquisition unit.
Fig. 5 is a map illustrating a relationship between a road surface condition index and an additional rotation number.
Fig. 6 is a diagram illustrating a response delay time of a pump.
Fig. 7 is a flowchart illustrating a processing procedure for obtaining a rotation speed of the pump.
Fig. 8 is a diagram illustrating a detailed configuration of a suspension device of a first embodiment.
Fig. 9 is a diagram illustrating characteristics of the thrust when the suspension device of the first embodiment is made to serve as an active suspension.
Fig. 10 is a diagram illustrating characteristics of the thrust when the suspension device of the first embodiment is made to serve as a semi-active suspension.
Fig. 11 is a diagram illustrating characteristics of the thrust at the time of failure of the suspension device of the first embodiment.
Fig. 12 is a diagram illustrating a detailed configuration of a suspension device of a second embodiment.
Fig. 13 is a diagram illustrating characteristics of the thrust when suspension devices of the second and third embodiments are made to serve as active suspensions.
Fig. 14 is a diagram illustrating characteristics of the thrust when the suspension devices of the second and third embodiments are made to serve as semi-active suspensions.
Fig. 15 is a diagram illustrating characteristics of the thrust at the time of failure of the suspension devices of the second and third embodiments.
Fig. 16 is a diagram illustrating a detailed configuration of the suspension device of the third embodiment.

### Description of Embodiments

### <Basic Configuration of Suspension Device>

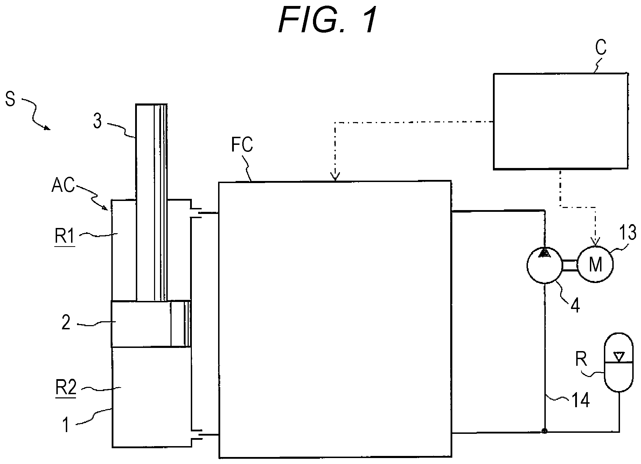

Hereinafter, the present invention will be described on the basis of the embodiments illustrated in the drawings. A suspension device S includes, as illustrated in Figs. 1 to 3, an actuator AC which is movable in a telescopic manner, a pump 4, a liquid pressure circuit FC which is provided between the actuator AC and the pump 4 and supplies a liquid discharged from the pump 4 to the actuator AC so that the actuator AC moves in a telescopic manner, and a controller C which controls the driving of the pump 4.

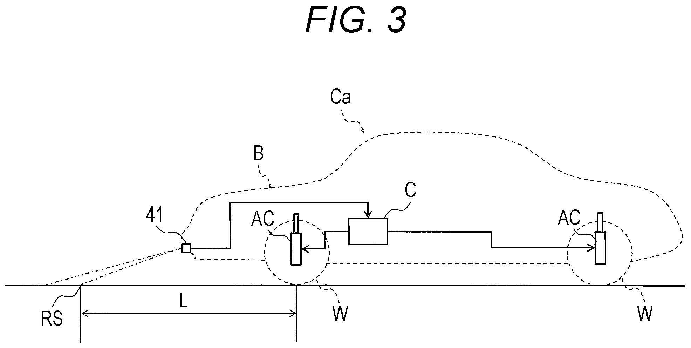

In the suspension device S, the actuator AC includes a cylinder 1, a piston 2 which is movably inserted into the cylinder 1 and defines the inside of the cylinder 1 into an extension side chamber R1 and a compression side chamber R2, and a rod 3 which is movably inserted into the cylinder 1 and is connected to the piston 2. The rod 3 is inserted only into the extension side chamber R1 and the actuator AC is configured as a so-called single rod type actuator. Additionally, a reservoir R is provided independently from the actuator AC as illustrated in Fig. 1 and may be formed such that an outer tube is disposed on the outer peripheral side of the cylinder 1 in the actuator AC and an annular gap formed between the cylinder 1 and the outer tube serves as the reservoir although not specifically illustrated in the drawings. Further, as illustrated in Fig. 3, the controller C is configured to control the actuators AC provided at four wheels of the vehicle Ca, but the number of the actuators AC controlled by the controller C may be arbitrarily determined.

Additionally, in a case in which the suspension device S is applied to the vehicle Ca, the cylinder 1 is connected to one of the vehicle body B and the vehicle wheel W of the vehicle Ca and the rod 3 is connected to the other of the vehicle body B and the vehicle wheel W so that the suspension device is interposed between the vehicle body B and the vehicle wheel W.

Then, the extension side chamber R1 and the compression side chamber R2 are filled with, for example, a liquid such as hydraulic oil as the liquid and the liquid is stored in the reservoir R. The reservoir R is also filled with the liquid and the liquid to be filled is pressurized by a gas spring or a spring or both of them. As the liquid filled in the extension side chamber R1, the compression side chamber R2, the reservoir R, and the reservoir R, for example, a liquid such as water or solution can be used other than the hydraulic oil. Further, in the present invention, a chamber which is compressed by an extension stroke will be referred to as the extension side chamber R1 and a chamber which is compressed by a compression stroke will be referred to as the compression side chamber R2.

The pump 4 is set to a one-way discharge type in which the liquid is sucked from the suction side and the liquid is discharged from the discharge side and is driven by a motor 13. For the motor 13, various types of motors, for example, a brushless motor, an induction motor, a synchronous motor, and the like can be adopted regardless of a direct current or an alternating current.

Then, the suction side of the pump 4 is connected to the reservoir R by a pump passage 14 and the discharge side is connected to a liquid pressure circuit FC. Thus, when the pump 4 is driven by the motor 13, the liquid is sucked from the reservoir R and the liquid is discharged to the liquid pressure circuit FC.

Further, the motor 13 for driving the pump 4 is controlled by the controller C. The controller C can adjust the amount of a current supplied to the motor 13 and can control the rotation number of the pump 4 as well as the driving and the stopping of the pump 4. That is, the driving of the pump 4 is controlled by the controller C.

The liquid pressure circuit FC includes an electromagnetic valve which is controlled by the controller C and is configured to supply a liquid discharged from the pump 4 to the extension side chamber R1 and the compression side chamber R2 of the actuator AC. Further, the liquid pressure circuit FC is configured to discharge an extra liquid among the liquid discharged from any one of the extension side chamber R1 and the compression side chamber R2 and the liquid discharged from the pump 4 to the reservoir R. Then, the liquid pressure circuit FC is configured to control the thrust of the actuator AC by adjusting the pressures of the extension side chamber R1 and the compression side chamber R2 in accordance with an instruction from the controller C and allows the actuator AC to serve as an active suspension. When the pump 4 is stopped and the actuator AC cannot receive the liquid from the pump 4, the liquid pressure circuit FC allows the actuator AC to serve as a semi-active suspension or a damper that exerts the thrust for suppressing a telescopic movement when the telescopic movement occurs by an external input.

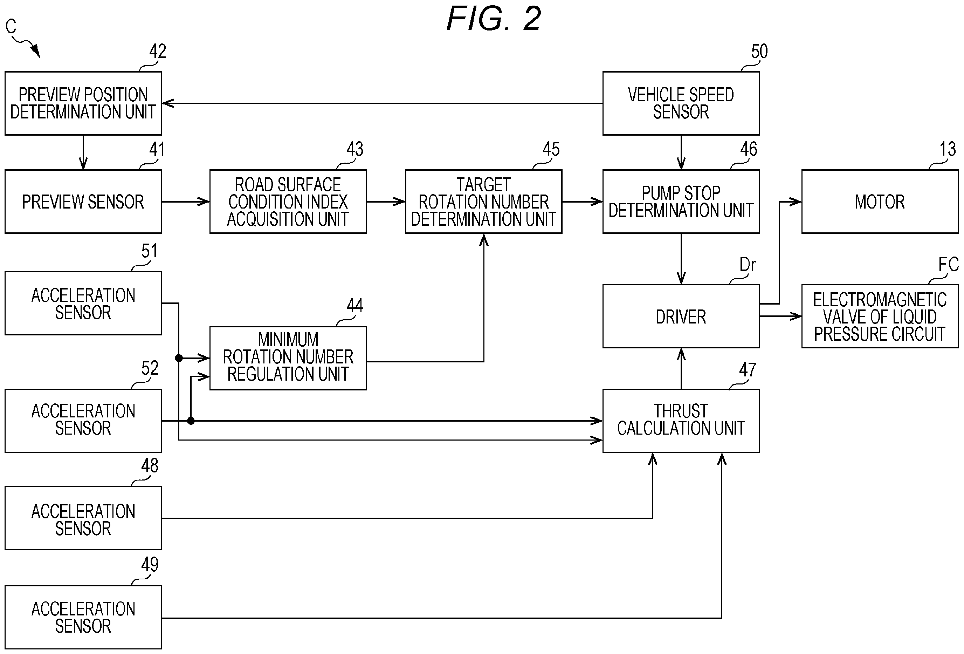

The controller C includes, as illustrated in Fig. 3, a preview sensor 41 which is provided at a front end of the vehicle Ca, a preview position determination unit 42, a road surface condition index acquisition unit 43, a minimum rotation number regulation unit 44, a target rotation number determination unit 45, a pump stop determination unit 46, a thrust calculation unit 47, a driver Dr, an acceleration sensor 48 which detects a vertical acceleration of the vehicle body B, an acceleration sensor 49 which detects a vertical acceleration of the vehicle wheel W, a vehicle speed sensor 50 which detects a speed (a vehicle speed) Vs of the vehicle Ca, an acceleration sensor 51 which detects a lateral acceleration Glat of the vehicle body B, and an acceleration sensor 52 which detects a longitudinal acceleration Glong of the vehicle body B. Fig. 2 illustrates a configuration in which the controller C controls one actuator AC in order to make understanding easier. Thus, in a case in which the single controller C controls four actuators AC respectively interposed between the vehicle body B and each wheel W of four wheels of the vehicle Ca, four acceleration sensors 49 for detecting the vertical acceleration of the vehicle wheel W may be provided to correspond to the actuators AC. Since the acceleration sensors 51 and 52 are sensors respectively detecting the lateral acceleration Glat and the longitudinal acceleration Glong of the vehicle body B, each of them may be provided for each vehicle body B. Additionally, the preview sensor 41 is included in the controller C, but in order to make understanding easier, Fig. 3 is depicted as a drawing in which the preview sensor 41 is independent from the controller C for convenience of description. Further, hereinafter, an operation of the controller C will be described by exemplifying a case of controlling the actuator AC provided at the front vehicle wheel W of the vehicle Ca.

The thrust calculation unit 47 obtains thrust which will be generated by the actuator AC and is necessary for the control of the vehicle body B of the vehicle Ca in order to suppress the vibration of the vehicle Ca. In this example, the thrust calculation unit 47 basically obtains the thrust which will be exerted by the actuator AC and is necessary to suppress the vibration of the vehicle body B on the basis of the vertical acceleration of the vehicle body B detected by the acceleration sensor 48 according to the skyhook control law as target thrust. Further, in this example, the thrust to be generated by the actuator AC is obtained as the target thrust in consideration of the posture control of suppressing the roll, nose dive, and squat of the vehicle body B corresponding to the vehicle body of the vehicle Ca by receiving the input of the lateral acceleration and the longitudinal acceleration detected by the acceleration sensors 51 and 52 and the vibration suppression control of suppressing the vibration of the vehicle wheel W by receiving the input of the vertical acceleration of the vehicle wheel W detected by the acceleration sensor 49 other than the vibration suppression control according to the skyhook control. In addition, in a case in which only the skyhook control is performed, the controller C may obtain the target thrust only from the vertical acceleration of the vehicle body B. For the control law used by the thrust calculation unit 47, a control law other than the skyhook control may be used or a control law suitable for the vehicle Ca may be selected.

Then, when the target thrust is the thrust of the actuator AC in the extension direction, the controller C controls the electromagnetic valve of the liquid pressure circuit FC so that the liquid discharged from the pump 4 is supplied to the compression side chamber R2 and the pressure of the compression side chamber R2 is controlled in response to the magnitude of the target thrust. In contrast, when the target thrust is the thrust of the actuator AC in the compression direction, the controller C controls the electromagnetic valve of the liquid pressure circuit FC so that the liquid discharged from the pump 4 is supplied to the extension side chamber R1 and the pressure of the extension side chamber R1 is controlled in response to the magnitude of the target thrust. Specifically, the target thrust obtained by the thrust calculation unit 47 is input to the driver Dr as a control instruction so that the driver Dr drives the electromagnetic valve according to the instruction of the target thrust and the thrust of the actuator AC is controlled according to the target thrust.

In this way, the controller C includes the preview sensor 41, the preview position determination unit 42, the road surface condition index acquisition unit 43, the minimum rotation number regulation unit 44, the target rotation number determination unit 45, and the pump stop determination unit 46 in order to control the discharge flow quantity of the pump 4 in addition to the control of the thrust of the actuator AC.

The preview sensor 41 is provided at the front end of the vehicle body B as illustrated in Fig. 3 and detects the road surface displacement of the road surface separated from the front vehicle wheel W of the vehicle Ca by a distance L determined by the preview position determination unit 42 in order to detect the displacement of the road surface where the vehicle Ca travels now. As the preview sensor 41, the sensor may be a sensor capable of detecting the displacement of the front road surface RS at a position separated from the vehicle Ca and, for example, sensors such as a millimeter wave radar, a microwave radar, a laser radar, an optical camera, an ultrasonic sonar, and an infrared sensor can be used. In addition, as long as a position in which the preview sensor 41 is installed in the vehicle body B is a position capable of detecting the road surface displacement, the preview sensor may be installed at a position other than the front end.

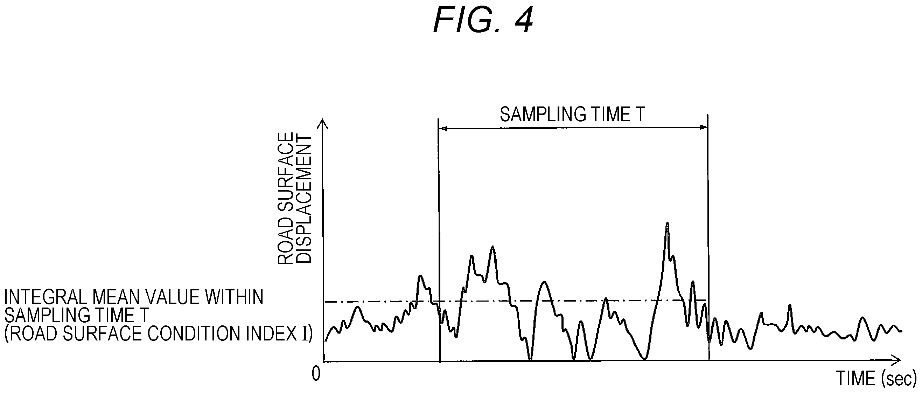

As illustrated in Fig. 2, in this embodiment, the road surface condition index acquisition unit 43 obtains an integral average value within a sampling time T of an absolute value of the road surface displacement of the front road surface RS input from the preview sensor 41 and sets the integral average value as a road surface condition index I. Specifically, as illustrated in Fig. 4, the road surface condition index I may be obtained in such a manner that the sum of the absolute values of the road surface displacement sampled within the sampling time T obtained by the absolute processing of the road surface displacement is divided by the sampling time T or the number of data of the road surface displacement. The sampling time T may be set to a length suitable for obtaining the road surface condition index I. The road surface condition index acquisition unit 43 obtains the road surface condition index I by using the road surface displacement sampled before the sampling time T from the time of the calculation of obtaining the road surface condition index I and repeats the calculation of obtaining the road surface condition index I every predetermined calculation cycle to continuously update the road surface condition index I to the latest value.

The road surface condition index I is a measure which illustrates the road surface roughness of the road surface on which the vehicle Ca travels and illustrates a state where the undulation and the unevenness of the road surface increase and the road surface becomes rough as the numerical value becomes larger. That is, since the road surface condition index I becomes larger as a variation in road surface displacement detected by the preview sensor 41 becomes larger, it is evaluated that the road surface roughness is coarse.

Further, in order to obtain the road surface condition index I, the integral value of the absolute value of the road surface displacement within the sampling time T, the integral average value of the absolute value, the root mean square value, the simple mean value of the absolute value, the maximum value of the absolute value, or the frequency distribution of the absolute value needs to be obtained. For example, when the integral value of the absolute value is used, the sum of the absolute values of the road surface displacement sampled within the range of the sampling time T may be obtained and the sum may be set as the value of the road surface condition index I. Of course, the road surface roughness becomes larger as the value of the road surface condition index I becomes larger.

When the root mean square value is set to the road surface condition index I, the square root of the value obtained by dividing the sum of the squares of the road surface displacement sampled within the sampling time T by the number of data of the road surface displacement may be obtained and may be used as the road surface condition index I. Further, when the frequency distribution is set to the road surface condition index I, a plurality of sections may be provided in the absolute value of the road surface displacement and the value given to the section having the largest number of data may be set to the road surface condition index I. When the frequency distribution is examined by correlating values to the sections so that the road surface condition index I increases as the road surface roughness becomes larger, the road surface condition index I becomes larger as the road surface roughness becomes coarser. Accordingly, the road surface condition index I may be obtained in this way. The value to be correlated with the section can be arbitrarily determined and the median value of the absolute value of the road surface displacement divided into the sections may be correlated with the value of the section.

The minimum rotation number regulation unit 44 sets the necessary minimum rotation number by comparing the lateral acceleration Glat of the vehicle body B detected by the acceleration sensor 51 with the lateral acceleration threshold value α and comparing the longitudinal acceleration Glong of the vehicle body B detected by the acceleration sensor 52 with a longitudinal acceleration threshold value β. Specifically, the minimum rotation number regulation unit 44 sets the necessary minimum rotation number Nb to a specified value Nb1 when the lateral acceleration Glat exceeds the lateral acceleration threshold value α or the longitudinal acceleration Glong exceeds the longitudinal acceleration threshold value β. The necessary minimum rotation number Nb is the rotation number of the pump 4 which is necessary to minimum to secure a flow quantity to be discharged by the pump 4 and the specified value Nb1 is set to a value exceeding 0 in advance. The nose dive generated at the time of braking the vehicle body B, the squat generated at the time of accelerating the vehicle body, or the roll generated at the time of turning the vehicle body is suppressed by the above-described posture control and the expansion and contraction amount of the actuator AC is slight. In such a case, since it is sufficient to adopt a flow quantity that is small enough to set the pressure in the actuator AC to the pressure necessary for the control to the minimum, the specified value Nb1 may be a low rotation number. Further, the minimum rotation number regulation unit 44 sets the necessary minimum rotation number Nb to 0 when the lateral acceleration Glat is the lateral acceleration threshold value α or less and the longitudinal acceleration Glong is the longitudinal acceleration threshold value β or less.

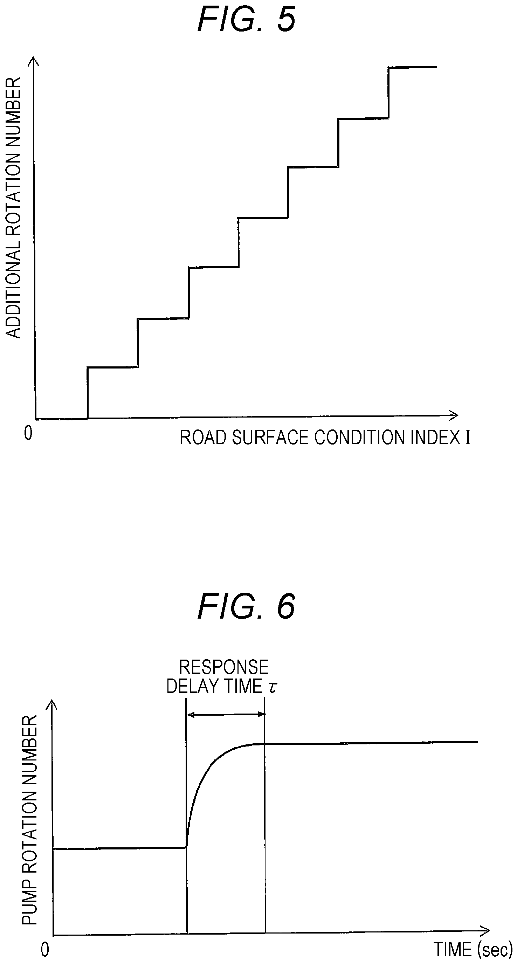

The target rotation number determination unit 45 determines the target rotation number Nref of the pump 4 on the basis of the road surface condition index I. Specifically, the target rotation number determination unit 45 has a map which illustrates a relationship between the road surface condition index I and the additional rotation number Nr and performs a map calculation for obtaining the additional rotation number Nr obtained from the road surface condition index I input from the road surface condition index acquisition unit 43 with reference to the map. In the map, as illustrated in Fig. 5, the additional rotation number Nr is correlated so that the numerical value gradually increases as the road surface condition index I increases. The above-described map is an example and the map may correlate, for example, the road surface condition index I and the additional rotation number Nr so that the additional rotation number Nr linearly increases with an increase in the road surface condition index I. Further, when the target rotation number determination unit 45 obtains the additional rotation number Nr, the target rotation number Nref is obtained by adding the additional rotation number Nr to the necessary minimum rotation number Nb input separately from the road surface condition index I and the target rotation number Nref is input to the pump stop determination unit 46. When the minimum rotation number regulation unit 44 sets the necessary minimum rotation number Nb to the specified value Nb1, the target rotation number determination unit 45 outputs a value obtained by adding the additional rotation number Nr to the specified value Nb1. When the minimum rotation number regulation unit 44 sets the necessary minimum rotation number Nb to 0, the target rotation number determination unit 45 adds the additional rotation number Nr to 0 and thus the additional rotation number Nr is directly output as the target rotation number Nref. The road surface condition index I is a measure of the road surface roughness and the expansion and contraction amount and the expansion and contraction speed of the actuator AC tend to become higher when the vehicle Ca travels on the road surface having high road surface roughness. Thus, when the value of the road surface condition index I is large, the actuator AC is forcedly made to expand and contract by an external force and thus the amount of the fluid necessary inside the cylinder 1 also increases. For that reason, since there is a need to increase the rotation number of the pump 4, the additional rotation number Nr may be correlated with the road surface condition index I so that the additional rotation number Nr becomes larger as the road surface condition index I increases.

Additionally, when the minimum rotation number regulation unit 44 is omitted, the target rotation number determination unit 45 may directly obtain the target rotation number Nref from the road surface condition index I by setting a relationship between the road surface condition index I and the target rotation number Nref as a map in advance instead of obtaining the additional rotation number Nr from the road surface condition index I. Further, the target rotation number determination unit 45 uses a map at the time of obtaining the additional rotation number Nr or the target rotation number Nref from the road surface condition index I, but may obtain the additional rotation number Nr or the target rotation number Nref by calculating a function in which the road surface condition index I is a parameter.

The pump stop determination unit 46 sets the target rotation number Nref of the pump 4 to 0 when the vehicle speed Vs is a speed threshold value γ or less. Specifically, the pump stop determination unit 46 determines whether the vehicle speed Vs is the speed threshold value γ or less by receiving the input of the vehicle speed Vs from the vehicle speed sensor 50 and sets the target rotation number of the pump 4 to 0 so that the target rotation number is output when the vehicle speed Vs is the speed threshold value γ or less. On the contrary, when the vehicle speed Vs exceeds the speed threshold value γ, the pump stop determination unit 46 directly outputs the target rotation number Nref output from the target rotation number determination unit 45 and inputs the target rotation number to the driver Dr. Since both the expansion and contraction amount and the expansion and contraction speed of the actuator AC are small when the vehicle speed Vs is low and the vibration of the vehicle Ca can be sufficiently suppressed by the thrust generated by the actuator AC even when the pump 4 is stopped, the pump 4 is stopped while the target rotation number Nref is 0. The speed threshold value γ is arbitrarily set to be suitable for the vehicle Ca equipped with the suspension device S.

The driver Dr includes a driving circuit which PWM-drives the electromagnetic valve of the liquid pressure circuit FC and a driving circuit which PWM-drives the motor 13 for driving the pump 4 and supplies a current to the electromagnetic valve and the motor 13 when receiving an instruction from the thrust calculation unit 47 to the electromagnetic valve and an instruction from the pump stop determination unit 46. Additionally, the driving circuits of the driver Dr may be driving circuits other than the driving circuit for performing PWM-driving.

The preview position determination unit 42 determines whether the preview sensor 41 detects the front road surface RS separated from the vehicle Ca on the basis of the vehicle speed Vs input from the vehicle speed sensor 50. That is, the preview position determination unit 42 determines the distance L to the vehicle Ca from the front road surface RS detected by the preview sensor 41 on the basis of the vehicle speed Vs. Although it will be specifically described later, the road surface condition index acquisition unit 43 obtains the road surface condition index I by using the integral average value of the road surface displacement obtained by the preview sensor 41 at a predetermined sampling time T. Further, as illustrated in Fig. 6, the pump 4 has a response delay time τ in hardware and the controller C changes the rotation number of the motor 13 to generate a time delay at the time of changing the rotation number of the pump 4.

Then, when the vehicle speed Vs rises or falls in a case in which the preview sensor 41 detects the front road surface RS separated from the vehicle Ca by a predetermined distance, a time at which the vehicle wheel W of the vehicle Ca passes through the front road surface RS from a time at which the preview sensor 41 detects the road surface displacement of the front road surface RS changes.

Thus, the rotation number of the pump 4 may be controlled by using the road surface condition index I obtained from the road surface displacement of the front road surface RS detected by the preview sensor 41 and the vehicle wheel W may pass through the front road surface RS at a timing at which the pump 4 is controlled according to the rotation number instructed by the controller C. A time obtained by adding the sampling time T and the response delay time τ of the pump 4 elapses until the controller C controls the rotation number of the pump 4 from a time at which the road surface displacement is detected by the preview sensor 41. For this elapse time, the distance in which the vehicle Ca travels changes in response to the vehicle speed Vs. Here, the preview position determination unit 42 obtains the distance L by multiplying the vehicle speed Vs by a value obtained by adding the sampling time T and the response delay time τ. That is, the preview position determination unit 42 obtains the distance L by calculating L=Vs×(T+τ). Then, the preview position determination unit 42 obtains the distance L and changes the front road surface RS detected by the preview sensor 41. When the distance L is obtained in this way, the front road surface RS detected by the preview sensor 41 is obtained and the vehicle wheel passes through the front road surface RS at a timing at which the pump 4 is controlled according to the rotation number instructed by the controller C.

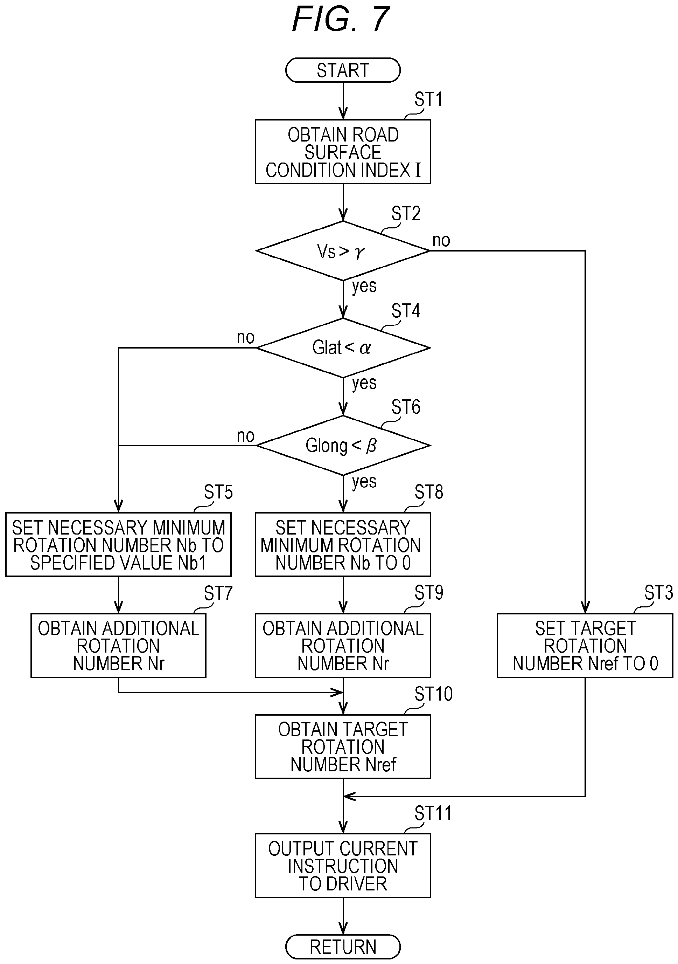

The respective parts of the controller C are operated as described above. Next, a processing procedure of obtaining the target rotation number Nref of the pump 4 in the controller C will be described with reference to an example of the flowchart illustrated in Fig. 7. Above all, the controller C obtains the road surface condition index I by receiving the input of the preview sensor 41 (step ST1). Next, the routine proceeds to step ST2 and the controller C determines whether the vehicle speed Vs exceeds the speed threshold value γ so that the routine proceeds to step ST3 when the vehicle speed Vs is the speed threshold value γ or less and the routine proceeds to step ST4 when the vehicle speed Vs exceeds the speed threshold value γ.

In step ST3, since the vehicle speed Vs is the speed threshold value γ or less, the controller C sets the target rotation number Nref to 0 and the routine proceeds to step ST11. Meanwhile, in step ST4, the controller C determines whether the lateral acceleration Glat exceeds the lateral acceleration threshold value α so that the routine proceeds to step ST5 when the lateral acceleration Glat exceeds the lateral acceleration threshold value α. In addition, the routine proceeds to step ST6 when the lateral acceleration Glat is the lateral acceleration threshold value α or less.

In step ST6, the controller C determines whether the longitudinal acceleration Glong exceeds the longitudinal acceleration threshold value β so that the routine proceeds to step ST5 when the longitudinal acceleration Glong exceeds the longitudinal acceleration threshold value β. In contrast, the routine proceeds to step ST8 when the longitudinal acceleration Glong is the longitudinal acceleration threshold value β or less.

In step ST5, the controller C sets the necessary minimum rotation number Nb to the specified value Nb1 and the routine proceeds to step ST7. In step ST7, the controller C obtains the additional rotation number Nr from the road surface condition index I and the routine proceeds to step ST10.

In step ST8, the controller C sets the necessary minimum rotation number Nb to 0 and the routine proceeds to step ST9. In step ST9, the controller C obtains the additional rotation number Nr from the road surface condition index I and the routine proceeds to step ST10.

In step ST10, the controller C obtains the target rotation number Nref by adding the additional rotation number Nr to the necessary minimum rotation number Nb and the routine proceeds to step ST11. In step ST11, the controller C outputs a current instruction to the motor 13 so that the pump 4 is rotationally driven according to the target rotation number Nref. The controller C repeatedly obtains the target rotation number Nref of the pump 4 by repeating the above-described processing procedures and controls the pump 4.

A process of changing the position of the front road surface RS detected by the preview sensor 41 of the preview position determination unit 42 is performed by a routine difference from that of the above-described flowchart. Here, when the vehicle speed Vs changes, the position of the front road surface RS of the detection target is changed.

As described above, the suspension device S is operated according to the description above. Then, according to the suspension device S of the present invention, the target rotation number Nref is obtained on the basis of the road surface condition index I. The road surface condition index I is a measure of the road surface roughness and the expansion and contraction amount and the expansion and contraction speed of the actuator AC tend to become higher when the road surface becomes coarse. When the value of the road surface condition index I is large, the actuator AC is forcedly made to expand and contract by an external force so that the flow quantity necessary in the cylinder 1 increases. However, when the road surface condition index I is large, the value of the target rotation number Nref increases so that the flow quantity in the cylinder 1 is not insufficient. In contrast, when the value of the road surface condition index I is small, the value of the target rotation number Nref becomes smaller. Accordingly, since the rotation speed of the pump 4 decreases, the power consumption of the suspension device S decreases.

Thus, in the suspension device S of the present invention, since it is possible to decrease the rotation speed of the pump 4 when the vehicle travels on a smooth road surface in which the pump 4 is not driven at constant rotation speed and the discharge flow quantity maybe low, energy consumption decreases. Further, since the necessary flow quantity Q necessary for the actuator AC is supplied from the pump 4 even when the actuator AC expands and contracts at a high speed, the flow quantity does not become insufficient.

Thus, according to the suspension device S of the present invention, since energy consumption when driving the pump 4 can be decreased and the pump 4 is not driven at a constant rotation speed at all times, the suspension device S can be also used in an automobile such as HEV or EV.

Further, since the road surface condition index I is obtained on the basis of the road surface displacement of the front road surface RS detected by the preview sensor 41, it is possible to obtain the road surface condition index I of the road surface through which the vehicle Ca passes before the traveling of the vehicle. In this way, since it is possible to obtain the road surface condition index I of the road surface through which the vehicle Ca passes before the traveling of the vehicle and to control the rotation number of the pump 4 on the basis of the road surface condition index I, it is possible to secure the flow quantity necessary for the actuator AC when the vehicle Ca actually passes through the road surface. Thus, according to the suspension device S, since the thrust of the actuator AC is exerted as intended, the riding comfort of the vehicle Ca is also very good. Further, since it is possible to detect the road surface displacement in front of the vehicle Ca in advance even in a case in which the flow quantity necessary to exert the thrust of the actuator AC rapidly increases when the vehicle passes through a protrusion or a recess while the vehicle travels, it is possible to exert the thrust suitable for the actuator AC without causing an insufficient flow quantity.

Furthermore, in the suspension device S, since the distance L from the front road surface RS detected by the preview sensor 41 to the vehicle Ca is determined on the basis of the vehicle speed Vs, it is possible to change the position of the front road surface RS detected by the preview sensor 41 in response to a change in vehicle speed Vs. Thus, according to the suspension device S, since it is possible to reliably obtain the road surface condition index I of the road surface when the vehicle Ca passes through a certain road surface regardless of the vehicle speed Vs, it is possible to exert the thrust best suitable for the actuator AC by reliably preventing the lack of the flow quantity of the actuator AC.

Further, in the suspension device S, the distance L is obtained by multiplying the vehicle speed Vs by the value obtained by adding the sampling time T of the road surface displacement and the response delay time τ of the pump 4. Thus, it is possible to optimize the position of the front road surface RS detected by the preview sensor 41 in response to a change in vehicle speed Vs. With such a configuration, since it is possible to obtain the front road surface RS detected by the preview sensor 41, the vehicle wheel passes through the front road surface RS at a timing at which the pump 4 is controlled according to the rotation number instructed by the controller C. Thus, according to the suspension device S of this example, since it is possible to highly accurately secure the flow quantity necessary for the actuator AC, vibration suppression accuracy for the vehicle Ca is improved.

Further, in the suspension device S of this example, when the lateral acceleration Glat exceeds the lateral acceleration threshold value α or the longitudinal acceleration Glong exceeds the longitudinal acceleration threshold value β, the necessary minimum rotation number Nb is set to the specified value Nb1 exceeding 0. With such a configuration, since it is possible to secure the flow quantity necessary for the actuator AC to suppress the roll, nose dive, and squat of the vehicle body B, a lack of the thrust of the actuator AC does not occur.

Then, in the suspension device S of the embodiment of this example, when the lateral acceleration Glat is the lateral acceleration threshold value α or less and the longitudinal acceleration Glong is the longitudinal acceleration threshold value β or less, the necessary minimum rotation number Nb of the pump 4 is set to 0. Thus, since the target rotation number Nref of the pump 4 is set to an extremely low rotation number, it is possible to further effectively reduce energy consumption.

Further, in the suspension device S of the embodiment of this example, when the vehicle speed Vs is the speed threshold value γ or less, the target rotation number of the pump 4 is set to 0. Accordingly, the pump 4 is stopped in a state where the flow quantity from the pump 4 in the actuator AC is not necessary. Thus, it is possible to greatly reduce energy consumption compared to the conventional suspension device for driving the pump at a constant rotation speed at all times.

### <First Embodiment>

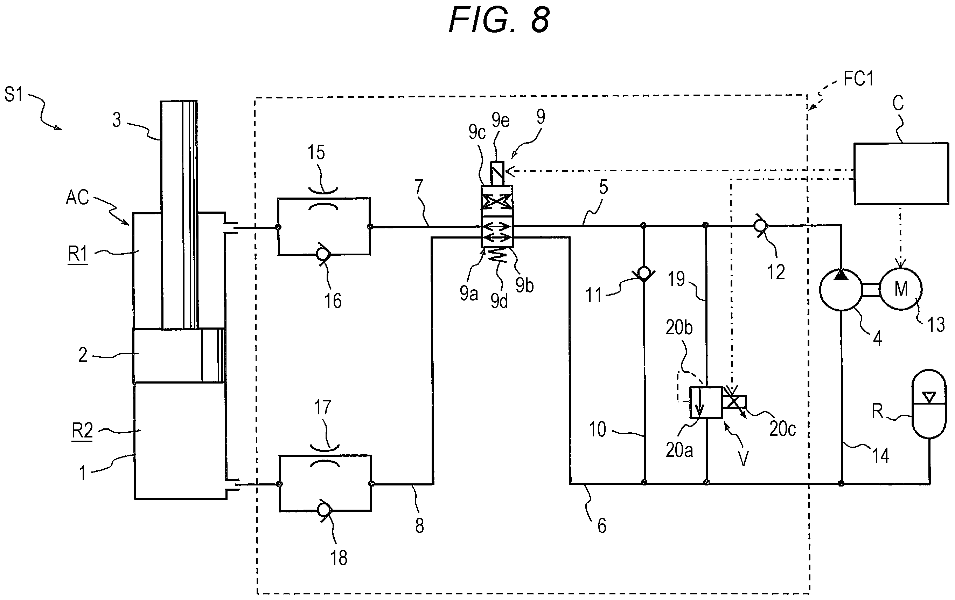

The basic configuration of the suspension device S is the same as that of the description above. Hereinafter, a detailed configuration example of a suspension device including a liquid pressure circuit will be described. A suspension device S1 of a first embodiment includes a liquid pressure circuit FC1 illustrated in Fig. 8.

The liquid pressure circuit FC1 includes a supply passage 5 which is connected to the discharge side of the pump 4, a discharge passage 6 which is connected to the reservoir R, an extension side passage 7 which is connected to the extension side chamber R1, a compression side passage 8 which is connected to the compression side chamber R2, an extension side damping valve 15 which is provided in the extension side passage 7, a compression side damping valve 17 which is provided in the compression side passage 8, a switching valve 9 which is provided among the supply passage 5, the discharge passage 6, the extension side passage 7, and the compression side passage 8 to selectively connect one of the extension side passage 7 and the compression side passage 8 to the supply passage 5 and to selectively connect the other of the extension side passage 7 and the compression side passage 8 to the discharge passage 6, a control valve V which is able to adjust the pressure of the supply passage 5 in response to the supply current, a suction passage 10 which connects the supply passage 5 and the discharge passage 6, a suction check valve 11 which is provided in the course of the suction passage 10 and allows only the flow of the liquid from the discharge passage 6 toward the supply passage 5, and a supply side check valve 12 which is provided between the control valve V and the pump 4 in the course of the supply passage 5 and allows only the flow of the liquid from the pump 4 toward the control valve V. In the case of the liquid pressure circuit FC1, the switching valve 9 and the control valve V are provided as the electromagnetic valve and both valves are controlled by the controller C.

The suction side of the pump 4 is connected to the reservoir R by the pump passage 14 and the discharge side thereof is connected to the supply passage 5. Thus, the pump 4 is configured to suck the liquid from the reservoir R and to discharge the liquid to the supply passage 5 when the pump is driven by the motor 13. The discharge passage 6 communicates with the reservoir R as described above.

In addition to the extension side damping valve 15 which gives a resistance to the liquid moving from the extension side chamber R1 toward the switching valve 9, an extension side check valve 16 which is disposed in parallel to the extension side damping valve 15 and allows only the flow of the liquid from the switching valve 9 toward the extension side chamber R1 is provided in the course of the extension side passage 7. Thus, regarding the flow of the liquid moving from the extension side chamber R1 toward the switching valve 9, the liquid passes through only the extension side damping valve 15 and flows toward the switching valve 9 since the extension side check valve 16 is maintained in a closed state. Regarding the flow of the liquid moving from the switching valve 9 toward the extension side chamber R1, the liquid first passes through the extension side check valve 16 and flows toward the extension side chamber R1 since the extension side check valve 16 is opened and the resistance of the extension side check valve 16 given to the liquid is smaller than that of the extension side damping valve 15. The extension side damping valve 15 may be a throttle valve that allows a bidirectional flow or may be a damping valve such as a leaf valve or a poppet valve that allows only the flow from the extension side chamber R1 to the switching valve 9.

In addition to the compression side damping valve 17 which gives a resistance to the flow of the liquid moving from the compression side chamber R2 toward the switching valve 9, a compression side check valve 18 which is disposed in parallel to the compression side damping valve 17 and allows only the flow of the liquid moving from the switching valve 9 toward the compression side chamber R2 is provided in the course of the compression side passage 8. Thus, regarding the flow of the liquid moving from the compression side chamber R2 toward the switching valve 9, the liquid passes through only the compression side damping valve 17 and flows toward the switching valve 9 since the compression side check valve 18 is maintained in a closed state. Regarding the flow of the liquid moving from the switching valve 9 toward the compression side chamber R2, the liquid first passes through the compression side check valve 18 and flows toward the compression side chamber R2 since the compression side check valve 18 is opened and the resistance of the compression side check valve 18 given to the liquid is smaller than that of the compression side damping valve 17. The compression side damping valve 17 may be a throttle valve that allows a bidirectional flow or may be a damping valve such as a leaf valve or a poppet valve that allows only the flow from the compression side chamber R2 toward the switching valve 9.

Further, the suction passage 10 which connects the supply passage 5 to the discharge passage 6 is provided. The suction check valve 11 which allows only the flow of the liquid moving from the discharge passage 6 toward the supply passage 5 is provided in the course of the suction passage 10 and the suction passage 10 is set as a one-way passage allowing only the flow of the liquid moving from the discharge passage 6 toward the supply passage 5.

The switching valve 9 is configured as an electromagnetic switching valve having four ports and two positions and includes a spool 9a which includes an extension side supply position 9b allowing the extension side passage 7 and the supply passage 5 to communicate with each other and allowing the compression side passage 8 and the discharge passage 6 to communicate with each other and a compression side supply position 9c allowing the extension side passage 7 and the discharge passage 6 to communicate with each other and allowing the compression side passage 8 and the supply passage 5 to communicate with each other, a spring 9d which urges the spool 9a, and a solenoid 9e which faces the spring 9d and gives thrust to the spool 9a. Then, when electric power is not supplied to the solenoid 9e, the spool 9a is urged by the spring 9d to select the extension side supply position 9b. Meanwhile, when electric power is supplied to the solenoid 9e, the spool 9a is pressed by the thrust of the solenoid 9e to select the compression side supply position 9c.

Thus, when the switching valve 9 selects the extension side supply position 9b, the supply passage 5 communicates with the extension side chamber R1 through the extension side passage 7 and the discharge passage 6 communicates with the compression side chamber R2 through the compression side passage 8. When the pump 4 is driven in this state, the liquid is supplied to the extension side chamber R1 so that the liquid is discharged from the compression side chamber R2 to the reservoir R, thereby contracting the actuator AC. Meanwhile, when the switching valve 9 selects the compression side supply position 9c, the supply passage 5 communicates with the compression side chamber R2 through the compression side passage 8 and the discharge passage 6 communicates with the extension side chamber R1 through the extension side passage 7. When the pump 4 is driven in this state, the liquid is supplied to the compression side chamber R2 so that the liquid is discharged from the extension side chamber R1 to the reservoir R, thereby expanding the actuator AC.

Further, the liquid is discharged from the pump 4 to the supply passage 5, but in order to control the pressure of the supply passage 5, the liquid pressure circuit FC is provided with the control valve V. The control valve V is specifically provided in the course of the control passage 19 connecting the supply passage 5 and the discharge passage 6 to each other and can control the pressure of the supply passage 5 at the upstream side of the control valve V by adjusting the valve opening pressure.

The control valve V is configured as an electromagnetic pressure control valve in this example and includes a valve body 20a which is provided in the course of the control passage 19, a pilot passage 20b which applies a pressure at an upstream side corresponding to the side of the supply passage 5 to the valve body 20a as a pilot pressure in a direction in which the valve body 20a is opened and closed, and a solenoid 20c which gives thrust to the valve body 20a. The solenoid 20c includes a spring and a coil (not illustrated). The spring of the solenoid 20c urges the valve body 20a in the valve opening and closing direction at all times and the solenoid 20c can generate thrust facing the spring urging the valve body 20a in a state where no electric power is supplied thereto. Thus, since it is possible to increase and decrease the valve opening pressure of the control valve V by adjusting the amount of current supplied to the solenoid 20c, it is possible to control the pressure of the supply passage 5 to become the valve opening pressure of the control valve V. In this way, the control valve V can adjust the pressure of the supply passage 5 in response to the supply current, but a detailed configuration of the control valve V is an example and is not limited thereto.

In the control valve V, it is possible to obtain the valve opening pressure which is proportional to the current amount supplied to the solenoid 20c. Here, the valve opening pressure increases as the current amount increases and the valve opening pressure becomes minimal when the current is not supplied. Further, the control valve V has such a characteristic that there is no pressure override in which the pressure loss increases in proportion to the flow quantity in the practical range of the suspension device S1. Additionally, the practical range may be a region in which the actuator AC expands and contracts within the range of 1 m per second, for example, when the actuator AC is used while being interposed between the vehicle wheel W and the vehicle body B of the vehicle Ca as illustrated in Fig. 3. The characteristic in which there is no pressure override in which the pressure loss increases in proportion to the flow quantity in the practical range indicates a characteristic in which the pressure override can be ignored at the flow quantity passing through the control valve V when the actuator AC expands and contracts within the range of 1 m per second. Further, in this embodiment, the valve opening pressure of the control valve V is very small when not electric power is supplied thereto and thus the control valve substantially does not give a resistance to the flow of the passing liquid in a state where no electric power is supplied thereto.

Further, the suction passage 10 which connects the supply passage 5 and the discharge passage 6 to each other is provided in parallel to the control passage 19. The suction check valve 11 which allows only the flow of the liquid from the discharge passage 6 toward the supply passage 5 is provided in the course of the suction passage 10 and the suction passage 10 is set as a one-way passage allowing only the flow of the liquid moving from the discharge passage 6 toward the supply passage 5.

The supply side check valve 12 is provided between the control valve V and the pump 4 in the course of the supply passage 5. More specifically, the supply side check valve 12 is provided on the side of the pump 4 in relation to the connection point between the control passage 19 and the suction passage 10 in the course of the supply passage 5 and the supply side check valve 12 allows only the flow of the liquid moving from the pump 4 toward the control valve V and prohibits the opposite flow. Thus, even when the pressure on the side of the switching valve 9 is higher than the discharge pressure of the pump 4, the supply side check valve 12 is closed to prohibit the reverse flow of the liquid toward the pump 4.

The operation of the suspension device S1 with the above-described configuration will be described. Above all, an operation in a normal case in which the motor 13, the pump 4, the switching valve 9, and the control valve V can be operated normally will be described.

Basically, the pump 4 is driven by the motor 13 so that the liquid to be discharged by the pump 4 is supplied to a chamber connected to the pump 4 between the extension side chamber R1 and the compression side chamber R2 by the switching valve 9 and the other chamber is made to communicate with the reservoir R through the discharge passage 6. With such a configuration, the actuator AC can serve as an actuator which actively expands or contracts. When the thrust generated by the actuator AC is in the extension direction of the actuator AC, the compression side chamber R2 is connected to the supply passage 5 and the extension side chamber R1 is connected to the reservoir R while the switching valve 9 is located at the compression side supply position 9c. In contrast, when the thrust generated by the actuator AC is in the compression direction of the actuator AC, the extension side chamber R1 is connected to the supply passage 5 and the compression side chamber R2 is connected to the reservoir R while the switching valve 9 is located at the extension side supply position 9b. Then, it is possible to control the extension direction of the actuator AC or the magnitude of the thrust in the compression direction by adjusting the pressure of the supply passage 5 using the control valve V.

The calculation of the target thrust, the calculation of the current amount given to the control valve V and the switching valve 9, and the supply of the current amount are performed by the controller C controlling the motor 13, but may be performed by the upper-level controller C. The driver Dr of the suspension device S1 includes, for example, a driving circuit which PWM-drives the solenoid 20c and the solenoid 9e of the control valve V and the switching valve 9 and a driving circuit which PWM-drives the motor 13. Then, the driver Dr supplies a current to the solenoid 20c, the solenoid 9e, and the motor 13 according to the value determined by the controller C. Each of the driving circuits of the driver Dr may be a driving circuit other than the driving circuit used for the PWM-driving.

Then, when the target thrust generated by the actuator AC is in the extension direction of the actuator AC, the controller C may select the compression side supply position 9c of the switching valve 9. Further, when the target thrust generated by the actuator AC is in the compression direction of the actuator AC, the controller C selects the extension side supply position 9b of the switching valve 9. The driver Dr supplies or stops the current to the solenoid 9e to be switched to a position selected in the switching valve 9. Specifically, in this example, when the actuator AC is operated to contract, the liquid is supplied to the extension side chamber R1 and the liquid is discharged from the compression side chamber R2 to the reservoir R. For this reason, no current is supplied to the solenoid 9e of the switching valve 9 to select the extension side supply position 9b. In contrast, when the actuator AC is operated to expand, the liquid is supplied to the compression side chamber R2 and the liquid is discharged from the extension side chamber R1 to the reservoir R. For this reason, a current may be supplied to the solenoid 9e of the switching valve 9 to select the compression side supply position 9c. Regarding the control law used for the control of the thrust in the suspension device S1, a control law suitable for the vehicle Ca may be selected. For example, a control law such as a skyhook control which is excellent for suppressing the vibration of the vehicle Ca may be employed. Further, information input to the controller C may be information suitable for the control law employed by the controller C. Although not illustrated in the drawings, the information may be detected by a sensor or the like and may be input to the controller C. Additionally, a controller may be provided separately from the controller C at the time of controlling the control valve V and the switching valve 9.

While the operation of actively expanding and contracting the actuator AC has been described, the actuator AC expands and contracts due to a disturbance caused by the unevenness of the road surface while the vehicle travels. Hereinafter, the operation based on the expansion and contraction of the actuator AC subjected to the disturbance will be described.

First, an operation of discharging the liquid to the supply passage 5 by driving the pump 4 will be described. When the actuator AC expands and contracts due to external disturbance, four cases are supposed according to a direction in which the actuator AC generates the thrust and the expansion and contraction direction of the actuator AC.

Above all, as a first case, a case in which the thrust for pressing the piston 2 downward is exerted on the suspension device S1 and the actuator AC is operated to expand due to an external force will be described. The direction of the thrust generated by the actuator AC is a direction of pressing the piston 2 downward and there is a need to supply the liquid to the extension side chamber R1. In this case, the switching valve 9 is switched to select the extension side supply position 9b so that the extension side chamber R1 is connected to the supply passage 5 and the compression side chamber R2 communicates with the reservoir R through the discharge passage 6.

Since the volume of the extension side chamber R1 decreases when the actuator AC is operated to expand, the liquid corresponding to the decreased amount is discharged from the extension side chamber R1 through the extension side damping valve 15 and flows to the reservoir R so as to pass through the control valve V via the supply passage 5. The rotation number of the pump 4 is controlled to the target rotation number Nref obtained as described above. Additionally, since the supply side check valve 12 is provided, the liquid does not reversely flow toward the pump 4 even when the pressure of the supply passage 5 dynamically becomes higher than the discharge pressure of the pump 4. Meanwhile, the liquid corresponding to the increased volume amount is supplied from the reservoir R to the compression side chamber R2 increasing in volume via the discharge passage 6.

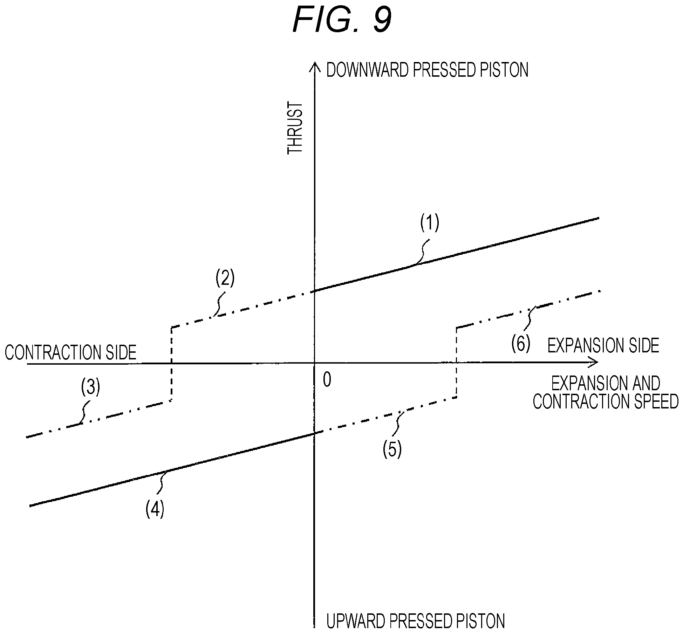

Since the pressure of the supply passage 5 is controlled to the valve opening pressure of the control valve V by the control valve V, the pressure of the extension side chamber R1 becomes higher than the pressure of the supply passage 5 by the pressure loss generated when the liquid discharged from the extension side chamber R1 passes through the extension side damping valve 15. Thus, the pressure of the extension side chamber R1 in this case becomes higher than the pressure of the reservoir R by a pressure obtained by adding the pressure loss caused by the extension side damping valve 15 to the valve opening pressure of the control valve V. Meanwhile, the compression side chamber R2 is isobaric to the reservoir R and the pressure of the extension side chamber R1 can be recognized as the differential pressure with the pressure of the reservoir R. Thus, the pressure of the extension side chamber R1 becomes higher than the compression side chamber R2 by a value obtained by adding a pressure corresponding to the pressure loss generated in the extension side damping valve 15 to the valve opening pressure of the control valve V and the actuator AC exerts the thrust of suppressing the expansion. The characteristics of the expansion and contraction speed and the exerted thrust of the actuator AC when the valve opening pressure of the control valve V is set to maximum are obtained as characteristics indicated by the line (1) in Fig. 9 in a graph of Fig. 9 in which a vertical axis indicates the thrust of the actuator AC and a horizontal axis indicates the expansion and contraction speed of the actuator AC.

Next, as a second case, a case in which the thrust for pressing the piston 2 downward is exerted on the suspension device S1 and the actuator AC is operated to contract due to an external force will be described. Since the direction of the thrust generated by the actuator AC is a direction of pressing the piston 2 downward, there is a need to supply the liquid to the extension side chamber R1. Also in this case, the switching valve 9 is switched to select the extension side supply position 9b so that the extension side chamber R1 is connected to the supply passage 5 and the compression side chamber R2 communicates with the reservoir R through the discharge passage 6.

When the actuator AC is operated to contract, the volume of the extension side chamber R1 increases. The discharge flow quantity of the pump 4 is controlled to the volume increased amount or more of the extension side chamber R1 per unit time and the discharge flow quantity of the pump 4 is larger than the necessary flow quantity Q necessary in the extension side chamber R1. In this case, the liquid discharged from the pump 4 flows into the extension side chamber R1 through the extension side check valve 16 and the liquid which remains while not being absorbed by the extension side chamber R1 in the discharge flow quantity of the pump 4 flows to the reservoir R through the control valve V. Thus, the pressure of the extension side chamber R1 is isobaric to the pressure of the supply passage 5 and is controlled to the valve opening pressure of the control valve V. In the other compression side chamber R2 which decreases in volume, the liquid corresponding to the volume decreased amount is discharged from the compression side chamber R2 to the reservoir R through the compression side damping valve 17 and the discharge passage 6. The pressure of the compression side chamber R2 becomes higher than the pressure of the reservoir R by the pressure loss generated when the liquid discharged from the compression side chamber R2 passes through the compression side damping valve 17. Thus, in such a state, the pressure of the extension side chamber R1 becomes the same as the valve opening pressure of the control valve V. However, the pressure of the compression side chamber R2 becomes higher than the pressure of the reservoir R by the pressure loss generated in the compression side damping valve 17 and the pressure loss also increases by the increased flow quantity when the flow quantity discharged from the compression side chamber R2 increases. Thus, the pressure of the extension side chamber R1 becomes higher than the pressure of the compression side chamber R2 by a value obtained by subtracting a pressure corresponding to the pressure loss generated in the compression side damping valve 17 from the differential pressure adjusted by the control valve V and the actuator AC exerts the thrust for supporting the contraction. Then, the characteristics of the thrust of the actuator AC when the valve opening pressure of the control valve V is set to maximum are obtained as characteristics indicated by the line (2) in Fig. 9.

On the contrary, when the contraction speed of the actuator AC is high and the discharge flow quantity of the pump 4 is lower than the volume increased amount of the extension side chamber R1 per unit time even when the discharge flow quantity is controlled to maximum, the supply of the liquid from the pump 4 cannot follow the volume increased amount per unit time of the extension side chamber R1. Then, when all the liquid discharged from the pump 4 is absorbed to the extension side chamber R1, no liquid flows to the control valve V and the amount of the liquid deficient in the extension side chamber R1 is supplied from the reservoir R via the discharge passage 6 and the suction passage 10 with the suction check valve 11 opened. In such a state, the pressure of the extension side chamber R1 is substantially the same as the pressure of the reservoir R, but the pressure of the compression side chamber R2 becomes higher than the pressure of the reservoir R by the amount of the pressure loss caused by the compression side damping valve 17. For that reason, the actuator AC cannot exert the thrust in a direction in which the piston 2 is pressed downward and thus exerts the thrust in the opposite direction, that is, a direction in which the piston 2 is pressed upward. As described above, when the thrust for pressing the piston 2 downward is exerted on the suspension device S1, the actuator AC is operated to contract due to an external force and the thrust for pressing the piston 2 downward cannot be exerted when the discharge flow quantity of the pump 4 is smaller than the volume increased amount of the extension side chamber R1 per unit time. In such a state, the thrust of the actuator AC has characteristics indicated by the line (3) in Fig. 9 regardless of the valve opening pressure of the control valve V. In a case in which the valve opening pressure of the control valve V is set to maximum, the thrust of the actuator has characteristics indicated by the line (2) in Fig. 9 when the discharge flow quantity of the pump 4 is the volume increased amount or more of the extension side chamber R1 per unit time and the characteristics change to the characteristics indicated by the line (3) in Fig. 9 when the discharge flow quantity of the pump 4 is smaller than the volume increased amount of the extension side chamber R1 per unit time.

Next, as a third case, a case in which the thrust for pressing the piston 2 upward is exerted on the suspension device S1 and the actuator AC is operated to contact due to an external force will be described. The direction of the thrust generated by the actuator AC is a direction of pressing the piston 2 upward. In this case, since there is a need to supply the liquid to the compression side chamber R2, the switching valve 9 is switched to select the compression side supply position 9c so that the compression side chamber R2 is connected to the supply passage 5 and the extension side chamber R1 communicates with the reservoir R through the discharge passage 6.

Since the volume of the compression side chamber R2 decreases when the actuator AC is operated to contract, the liquid corresponding to the decreased amount is discharged from the compression side chamber R2 through the compression side damping valve 17 and flows to the reservoir R to pass through the control valve V via the supply passage 5. The rotation number of the pump 4 is controlled to the target rotation number Nref obtained as described above. Additionally, since the supply side check valve 12 is provided, the liquid does not reversely flow toward the pump 4 even when the pressure of the supply passage 5 actively becomes higher than the discharge pressure of the pump 4. Meanwhile, the liquid corresponding to the increased volume amount is supplied from the reservoir R to the extension side chamber R1 increasing in volume through the discharge passage 6.

Since the pressure of the supply passage 5 is controlled to the valve opening pressure of the control valve V by the control valve V, the pressure of the compression side chamber R2 becomes higher than the pressure of the supply passage 5 by the amount of the pressure loss generated when the liquid discharged from the compression side chamber R2 passes through the compression side damping valve 17. The pressure of the other extension side chamber R1 is isobaric to the reservoir R. Thus, the pressure of the compression side chamber R2 becomes higher than the pressure of the extension side chamber R1 by a value obtained by adding a pressure corresponding to the pressure loss generated in the compression side damping valve 17 to the valve opening pressure of the control valve V and the actuator AC exerts the thrust for suppressing the contraction. Then, the characteristics of the thrust of the actuator AC when the valve opening pressure of the control valve V is set to maximum are obtained as characteristics indicated by the line (4) in Fig. 9.

Further, as a fourth case, a case in which the thrust for pressing the piston 2 upward is exerted on the suspension device S1 and the actuator AC is operated to expand due to an external force will be described. Since the direction of the thrust generated by the actuator AC is a direction of pressing the piston 2 upward, there is a need to supply the liquid to the compression side chamber R2. Thus, in this case, the switching valve 9 is switched to select the compression side supply position 9c so that the compression side chamber R2 is connected to the supply passage 5 and the extension side chamber R1 communicates with the reservoir R through the discharge passage 6.

When the actuator AC is operated to expand, the volume of the compression side chamber R2 increases. The discharge flow quantity of the pump 4 is controlled to the volume increased amount or more of the compression side chamber R2 per unit time and the discharge flow quantity of the pump 4 is larger than the necessary flow quantity Q necessary in the compression side chamber R2. For that reason, the liquid discharged from the pump 4 flows into the compression side chamber R2 through the compression side check valve 18 and the liquid which remains while not being absorbed to the compression side chamber R2 in the discharge flow quantity of the pump 4 flows to the reservoir R through the control valve V. Thus, the pressure of the compression side chamber R2 is isobaric to the pressure of the supply passage 5 and is controlled to the valve opening pressure of the control valve V. In the other extension side chamber R1 decreasing in volume, the liquid corresponding to the volume decreased amount is discharged from the extension side chamber R1 to the reservoir R through the extension side damping valve 15 and the discharge passage 6. The pressure of the extension side chamber R1 becomes higher than the pressure of the reservoir R by the amount of the pressure loss generated when the liquid discharged from the extension side chamber R1 passes through the extension side damping valve 15. In such a state, the pressure of the compression side chamber R2 is the same as the valve opening pressure of the control valve V. However, the pressure of the extension side chamber R1 becomes higher than the pressure of the reservoir R by the amount of the pressure loss generated by the extension side damping valve 15 and the pressure loss also increases when the flow quantity discharged from the extension side chamber R1 increases. Thus, the pressure of the compression side chamber R2 becomes higher than the pressure of the extension side chamber R1 by a value obtained by subtracting a pressure corresponding to the pressure loss generated in the extension side damping valve 15 from the differential pressure adjusted by the control valve V and the actuator AC exerts the thrust for supporting the expansion . Then, the characteristics of the thrust of the actuator AC when the valve opening pressure of the control valve V is set to maximum are obtained as characteristics indicated by the line (5) in Fig. 9.

On the contrary, when the expansion speed of the actuator AC is high and the discharge flow quantity of the pump 4 is smaller than the volume increased amount of the compression side chamber R2 per unit time even when the discharge flow quantity is controlled to maximum, the supply of the liquid from the pump 4 cannot follow the volume increased amount of the compression side chamber R2 per unit time. Then, when all the liquid discharged from the pump 4 is absorbed to the compression side chamber R2, no liquid flows to the control valve V and the amount of the liquid deficient in the compression side chamber R2 is supplied from the reservoir R via the discharge passage 6 and the suction passage 10 with the suction check valve 11 opened. In such a state, the pressure of the compression side chamber R2 is substantially the same as the pressure of the reservoir R, but the pressure of the extension side chamber R1 becomes higher than the pressure of the reservoir R by the amount of the pressure loss caused by the extension side damping valve 15. For that reason, the actuator AC cannot exert the thrust in a direction of pressing the piston 2 upward and exert the thrust in the opposite direction, that is, a direction of pressing the piston 2 downward. As described above, when the actuator AC is operated to expand due to an external force at the time of exerting the thrust for pressing the piston 2 upward on the suspension device S1, the thrust cannot be exerted in a direction of pressing the piston 2 upward when the discharge flow quantity of the pump 4 becomes smaller than the volume increased amount of the compression side chamber R2 per unit time. Thus, the thrust of the actuator AC have characteristics indicated by the line (6) in Fig. 9 regardless of the valve opening pressure of the control valve V. In a case in which the valve opening pressure of the control valve V is set to maximum, the thrust of the actuator has characteristics indicated by the line (5) in Fig. 9 when the discharge flow quantity of the pump 4 is the volume increased amount or more of the compression side chamber R2 per unit time and the characteristics change to characteristics indicated by the line (6) in Fig. 9 when the discharge flow quantity of the pump 4 is smaller than the volume increased amount of the compression side chamber R2 per unit time. Additionally, the thrust of the actuator AC has characteristics changing from the line (2) to the line (3) in Fig. 9 at the contraction side and has characteristics changing from the line (5) to the line (6) in Fig. 9 at the extension side. However, since the characteristics change instantly, there is a little influence on the riding comfort.

As described above, the thrust of the actuator AC is changeable in the range from a line connected from the line (1) to the line (3) to a line connected from the line (4) to the line (6) in Fig. 9 as the valve opening pressure of the control valve V is adjusted. Further, in a case in which the discharge flow quantity of the pump 4 is supplied to an extension side between the extension side chamber R1 and the compression side chamber R2 by the driving of the pump 4, when the discharge flow quantity of the pump 4 is the volume increased amount or more of the extended chamber, the actuator AC can exert the thrust in the same direction as the expansion and contraction direction.

Next, the operation of the suspension device S1 in a state in which the pump 4 is not driven and is stopped will be described. Alsointhiscase, four cases are supposed according to a direction in which the actuator AC expands and contracts due to a disturbance and a direction in which the thrust is generated by the actuator AC.

Above all, a case in which the thrust for pressing the piston 2 downward is exerted on the suspension device S1 and the actuator AC is operated to expand due to an external force will be described. Since the direction of the thrust generated by the actuator AC is a direction of pressing the piston 2 downward, the switching valve 9 is switched to select the extension side supply position 9b so that the extension side chamber R1 is connected to the supply passage 5 and the compression side chamber R2 communicates with the reservoir R through the discharge passage 6.

Since the volume of the extension side chamber R1 decreases when the actuator AC is operated to expand, the liquid corresponding to the decreased amount is discharged from the extension side chamber R1 through the extension side damping valve 15, passes through the control valve V via the supply passage 5, and flows to the reservoir R. Additionally, since the supply side check valve 12 is provided, no liquid flows to the pump 4. Meanwhile, the liquid corresponding to the increased volume amount is supplied from the reservoir R to the compression side chamber R2 increasing in volume through the discharge passage 6.

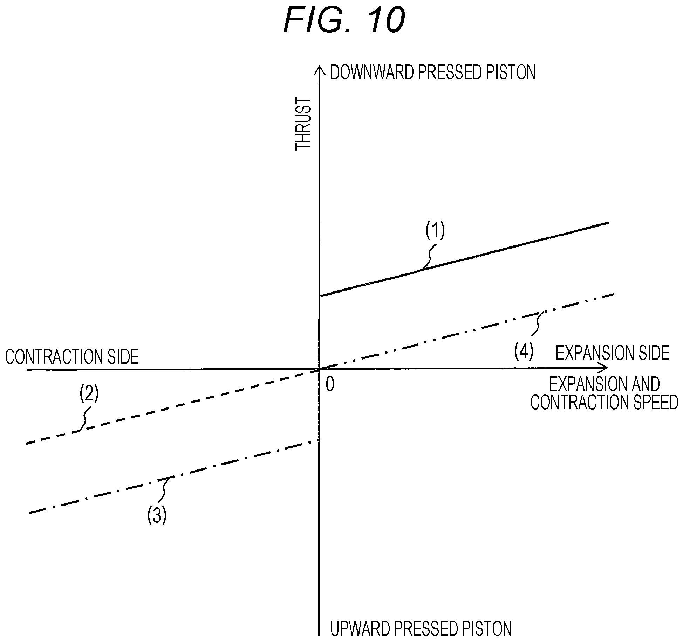

Since the pressure of the supply passage 5 is controlled to the valve opening pressure of the control valve V by the control valve V, the pressure of the extension side chamber R1 becomes higher than the pressure of the supply passage 5 by the amount of the pressure loss generated when the liquid discharged from the extension side chamber R1 passes through the extension side damping valve 15. Thus, the pressure of the extension side chamber R1 in this case becomes higher than the pressure of the compression side chamber R2 by a pressure obtained by adding the pressure loss generated in the extension side damping valve 15 to the valve opening pressure of the control valve V. In a graph of fig. 10 in which a vertical axis indicates the thrust direction of the actuator AC and a horizontal axis indicates the expansion and contraction speed of the actuator AC, the characteristics of the thrust of the actuator AC when the valve opening pressure of the control valve V is set to maximum have characteristics indicated by the line (1) in Fig. 10.

Next, a case in which the thrust for pressing the piston 2 downward is exerted on the suspension device S1 and the actuator AC is operated to contract due to an external force will be described. Although the liquid is not supplied from the pump 4 since the pump 4 is stopped, the direction of the thrust generated by the actuator AC is a direction of pressing the piston 2 downward. For that reason, the switching valve 9 is switched to select the extension side supply position 9b so that the extension side chamber R1 is connected to the supply passage 5 and the compression side chamber R2 communicates with the reservoir R through the discharge passage 6.

When the actuator AC is operated to contract, the volume of the extension side chamber R1 increases, but the pump 4 does not discharge the liquid. For this reason, no liquid flows to the control valve V and the amount of the liquid deficient in the extension side chamber R1 is supplied from the reservoir R through the discharge passage 6 and the suction passage 10 with the suction check valve 11 opened. In such a state, the pressure of the extension side chamber R1 is substantially the same as the pressure of the reservoir R. Regarding the other compression side chamber R2 decreasing in volume, the liquid corresponding to the volume decreased amount is discharged from the compression side chamber R2 to the reservoir R through the compression side damping valve 17 and the discharge passage 6. The pressure of the compression side chamber R2 becomes higher than the pressure of the extension side chamber R1 by the amount of the pressure loss generated when the liquid discharged from the compression side chamber R2 passes through the compression side damping valve 17. For that reason, the actuator AC cannot exert the thrust in a direction of pressing the piston 2 downward and exerts the thrust in the opposite direction, that is, a direction of pressing the piston 2 upward. As described above, when the pump 4 is stopped at the time of operating the actuator AC to contract due to an external force in a case in which the thrust for pressing the piston 2 downward is exerted on the suspension device S1, it is not possible to exert the thrust in a direction of pressing the piston 2 downward. Thus, the thrust of the actuator AC has characteristics indicated by the line (2) in Fig. 10 regardless of the valve opening pressure of the control valve V. This has the same effect as the case of controlling the compression side damping force to the lowest damping force in the damping force variable damper.

Next, a case in which the thrust for pressing the piston 2 upward is exerted on the suspension device S1 and the actuator AC is operated to contact due to an external force will be described. The direction of the thrust generated by the actuator AC is a direction of pressing the piston 2 upward. For that reason, the switching valve 9 is switched to select the compression side supply position 9c so that the compression side chamber R2 is connected to the supply passage 5 and the extension side chamber R1 communicates with the reservoir R through the discharge passage 6.

Since the volume of the compression side chamber R2 decreases when the actuator AC is operated to contract, the liquid corresponding to the decreased amount is discharged from the compression side chamber R2 through the compression side damping valve 17, passes through the control valve V via the supply passage 5, and flows to the reservoir R. Additionally, since the supply side check valve 12 is provided, no liquid flows to the pump 4. Meanwhile, the liquid corresponding to the increased volume amount is supplied from the reservoir R to the extension side chamber R1 increasing in volume through the discharge passage 6.

Since the pressure of the supply passage 5 is controlled to the valve opening pressure of the control valve V by the control valve V, the pressure of the compression side chamber R2 becomes higher than the pressure of the supply passage 5 by the amount of the pressure loss generated when the liquid discharged from the compression side chamber R2 passes through the compression side damping valve 17. Thus, the pressure of the compression side chamber R2 in this state becomes higher than the pressure of the extension side chamber R1 by a pressure obtained by adding the pressure loss of the pressure loss generated in the compression side damping valve 17 to the valve opening pressure of the control valve V. Thus, the characteristics of the thrust of the actuator AC when the valve opening pressure of the control valve V is set to maximum are obtained as characteristics indicated by the line (3) in Fig. 10.

Next, a case in which the thrust for pressing the piston 2 upward is exerted on the suspension device S1 and the actuator AC is operated to expand due to an external force will be described. Although the liquid is not supplied from the pump 4 since the pump 4 is stopped, the direction of the thrust generated by the actuator AC is a direction of pressing the piston 2 upward. For that reason, the switching valve 9 is switched to select the compression side supply position 9c so that the compression side chamber R2 is connected to the supply passage 5 and the extension side chamber R1 communicates with the reservoir R through the discharge passage 6.

When the actuator AC is operated to expand, the volume of the compression side chamber R2 increases, but since the pump 4 does not discharge the liquid, no liquid flows to the control valve V. The amount of the liquid deficient in the compression side chamber R2 is supplied from the reservoir R through the discharge passage 6 and the suction passage 10 with the suction check valve 11 opened. In such a state, the pressure of the compression side chamber R2 is substantially the same as the pressure of the reservoir R. In the other extension side chamber R1 decreasing in volume, the liquid corresponding to the volume decreased amount is discharged from the extension side chamber R1 to the reservoir R through the extension side damping valve 15 and the discharge passage 6. The pressure of the extension side chamber R1 becomes higher than the pressure of the reservoir R by the amount of the pressure loss generated when the liquid discharged from the extension side chamber R1 passes through the extension side damping valve 15. For that reason, the actuator AC cannot exert the thrust in a direction of pressing the piston 2 upward and exerts the thrust in the opposite direction, that is, a direction of pressing the piston 2 downward. As described above, when the pump 4 is stopped at the time of operating the actuator AC to expand due to an external force in a case in which the thrust for pressing the piston 2 upward is exerted on the suspension device S1, it is not possible to exert the thrust in a direction of pressing the piston 2 upward. Thus, the thrust of the actuator AC has characteristics indicated by the line (4) in Fig. 10 regardless of the valve opening pressure of the control valve V. This has the same effect as the case of controlling the extension side damping force to the lowest damping force in the damping force variable damper.

In this way, when the valve opening pressure of the control valve V is adjusted during the stop of the pump 4, the thrust of the actuator AC is changeable in the range from the line (4) to the line (1) within the first quadrant and is changeable in the range from the line (2) to the line (3) within the third quadrant in Fig. 10.

Here, a case of performing the skyhook control according to the Karnop law using the damping force variable damper in the semi active suspension is supposed. When the extension side damping force (a force of pressing the piston downward) is necessary, the damping force of the damping force variable damper is controlled to the damping force capable of obtaining the target thrust at the time of performing the expanding operation. However, since the extension side damping force cannot be obtained at the time of performing the contraction operation, the damping force is controlled to the lowest damping force at the compression side. Meanwhile, when the compression side damping force (a force of pressing the piston upward) isnecessary, the damping force of the damping force variable damper is controlled to the damping force capable of obtaining the target thrust at the time of performing the contraction operation. However, since the compression side damping force cannot be obtained at the time of performing the expansion operation, the damping force is controlled to the lowest damping force at the extension side. In the suspension device S1 of the present invention, when the actuator AC exerts the thrust for pressing the piston 2 downward while the pump 4 is stopped, the thrust of the actuator AC is controlled within the available output range by the switching valve 9 at the time of performing the expansion operation and the actuator AC exerts the lowest thrust at the time of performing the contraction operation. In contrast, in the suspension device S1 of the present invention, when the actuator AC exerts the thrust for pressing the piston 2 upward while the pump 4 is stopped, the thrust of the actuator AC is controlled within the available output range by the control valve V at the time of performing the contraction operation and the actuator AC exerts the lowest thrust at the time of performing the expansion operation. Thus, the suspension device S1 of the present invention can automatically exert the same function as the semi-active suspension when the pump 4 is stopped. Accordingly, when the discharge flow quantity of the pump 4 becomes smaller than the volume increased amount of the extension side chamber R1 or the compression side chamber R2 to be extended even when the pump 4 is driven, the suspension device S1 can automatically serve as the semi-active suspension.

Finally, the operation of the suspension device S1 when the motor 13, the switching valve 9, and the control valve V of the suspension device S1 are deactivated due to some abnormality will be described. Such failure includes, for example, a case of stopping the supply of electric power to the motor 13, the switching valve 9, and the control valve V when no abnormality is found in the controller C or the driver Dr in addition to a case in which electric power cannot be supplied to the motor 13, the switching valve 9, and the control valve V.

At the time of failure, the supply of electric power to the motor 13, the switching valve 9, and the control valve V is stopped or electric power cannot be supplied thereto. Accordingly, the pump 4 is stopped, the control valve V has the minimum valve opening pressure, and the switching valve 9 is urged by the spring 9d to select the extension side supply position 9b.

Since the volume of the extension side chamber R1 decreases when the actuator AC is operated to expand due to an external force in this state, the liquid corresponding to the decreased amount is discharged from the extension side chamber R1 through the extension side damping valve 15, passes through the control valve V via the supply passage 5, and flows to the reservoir R. Additionally, since the supply side check valve 12 is provided, no liquid flows to the pump 4. Meanwhile, the liquid corresponding to the increased volume amount is supplied from the reservoir R to the compression side chamber R2 increasing in volume through the discharge passage 6.

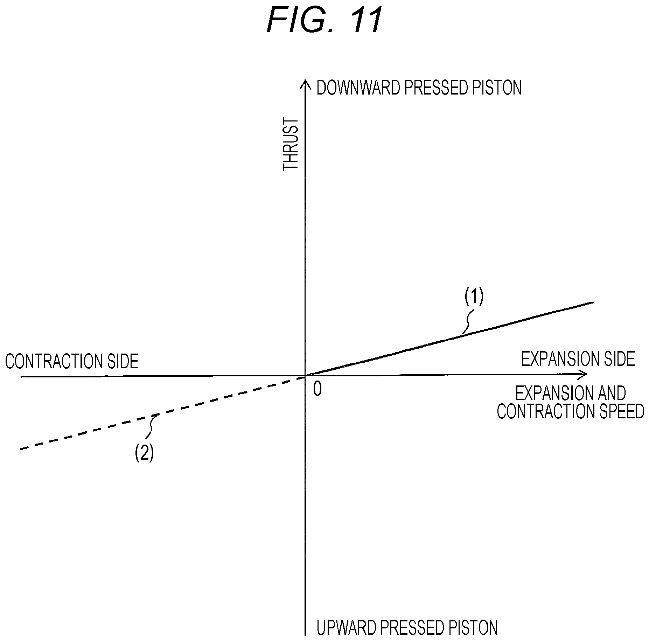

The liquid discharged from the extension side chamber R1 passes through the control valve V, but since the control valve V substantially does not give a resistance to the flow passing therethrough when no electric power is supplied to the control valve, the pressure of the supply passage 5 is substantially isobaric to the pressure of the reservoir R. Thus, since the pressure of the extension side chamber R1 becomes higher than the pressure of the supply passage 5 by the amount of the pressure loss generated when the liquid discharged from the extension side chamber R1 passes through the extension side damping valve 15, the pressure becomes higher than the pressure of the compression side chamber R2 by the amount of the pressure loss. Thus, the characteristics of the thrust of the actuator AC are obtained as characteristics indicated by the line (1) in Fig. 11 in the graph illustrated in Fig. 11.

In contrast, since the volume of the compression side chamber R2 decreases when the actuator AC is operated to contract due to an external force, the liquid corresponding to the decreased amount is discharged from the compression side chamber R2 through the compression side damping valve 17 and flows to the reservoir R. Meanwhile, the liquid corresponding to the increased volume amount is supplied to the extension side chamber R1 increasing in volume from the reservoir R to pass through the suction passage 10 and the suction check valve 11 via the discharge passage 6. Additionally, since the supply side check valve 12 is provided, no liquid flows to the pump 4. Thus, the pressure of the compression side chamber R2 becomes higher than the pressure of the extension side chamber R1 by the amount of the pressure loss generated when the liquid discharged from the compression side chamber R2 passes through the compression side damping valve 17. Thus, the characteristics of the thrust of the actuator AC are obtained as characteristics indicated by the line (2) in Fig. 11.

In such a failure state of the suspension device S1, since the actuator AC can serve as the passive damper to suppress the vibration of the vehicle body B and the vehicle wheel W, the fail-safe operation is reliably performed at the time of failure. Additionally, even when the switching valve 9 is designed to select the compression side supply position 9c in the facture of failure, characteristics illustrated in Fig. 11 can be realized and the fail-safe operation can be performed.

In this way, in the suspension device S1 of the present invention, the actuator AC is made to actively expand and contract so that the actuator serves as the semi-active suspension as well as the active suspension. Further, since the driving of the pump 4 is not essential in a situation in which the thrust needs to be exerted as the semi-active suspension, the pump 4 may be driven only when the driving is necessary and thus energy consumption is reduced. Thus, the suspension device S1 of the present invention can serve as the active suspension and can reduce energy consumption.

Further, since a pressure applied to the pump 4 is small when the control valve V has a characteristic that the pressure override for the flow quantity is small, the energy consumption amount of the pump 4 decreases and thus energy consumption can be more effectively suppressed.

Further, since the actuator AC serves as the passive damper to suppress the vibration of the vehicle body B and the vehicle wheel W in the failure state of the suspension device S1, the fail-safe operation is reliably performed at the time of failure.

Further, the suspension device S1 of this embodiment includes the extension side damping valve 15 which gives a resistance to the flow from the extension side chamber R1 toward the switching valve 9 serving as switching means, the extension side check valve 16 which is disposed in parallel to the extension side damping valve 15 and allows only the flow from the switching valve 9 toward the extension side chamber R1, the compression side damping valve 17 which gives a resistance to the flow from the compression side chamber R2 toward the switching valve 9, and the compression side check valve 18 which is disposed in parallel to the compression side damping valve 17 and allows only the flow from the switching valve 9 toward the compression side chamber R2. Thus, since it is possible to supply the liquid to the extension side chamber R1 or the compression side chamber R2 substantially without any resistance through the extension side check valve 16 or the compression side check valve 18 when supplying the liquid from the pump 4 to the extension side chamber R1 or the compression side chamber R2, it is possible to reduce the load of the pump 4 when the expansion and contraction direction of the actuator AC matches the direction of the generated thrust. Further, since a resistance is given to the flow of the liquid passing through the extension side damping valve 15 or the compression side damping valve 17 when the liquid is discharged from the extension side chamber R1 or the compression side chamber R2, large thrust can be obtained by setting the pressure of the extension side chamber R1 or the compression side chamber R2 to the valve opening pressure or more of the control valve V. Thus, the suspension device S1 can generate large thrust even when the thrust of the solenoid 20c of the control valve V is set to be small. Accordingly, the control valve V can be decreased in size and cost. Additionally, the extension side damping valve 15 and the compression side damping valve 17 may allow the bidirectional flow. In that case, the extension side check valve 16 and the compression side check valve 18 can be also omitted. Also in this case, since the driving of the pump 4 is not essential in a situation in which the suspension device S1 needs to exert the thrust as the semi-active suspension, the effect of the present invention that energy consumption is reduced is not lost.

### <Second Embodiment>

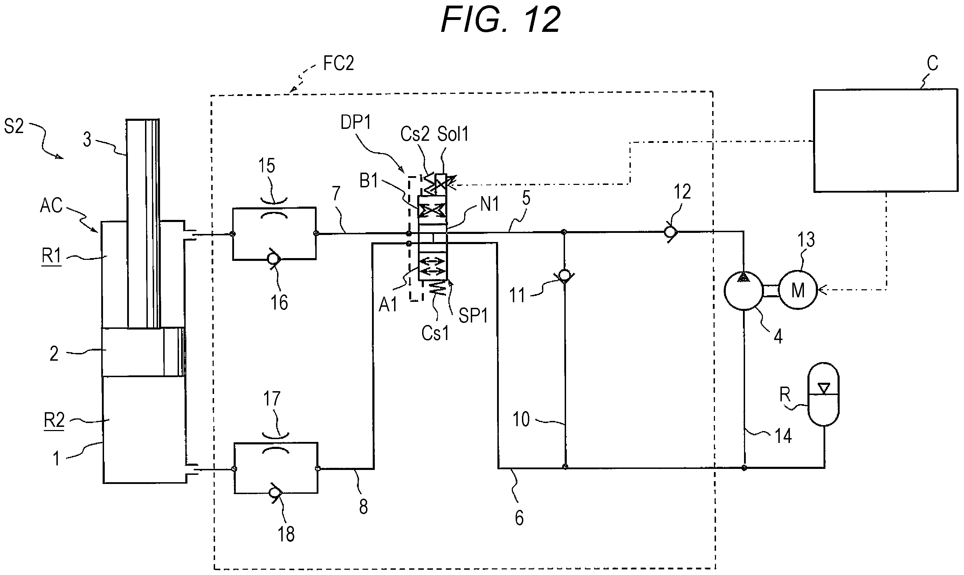

Another detailed configuration example of a suspension device including a liquid pressure circuit will be described. A suspension device S2 of a second embodiment includes a liquid pressure circuit FC2 illustrated in Fig. 12.

As illustrated in Fig. 12, the liquid pressure circuit FC2 is different from the liquid pressure circuit FC1 controlling the extension side chamber R1 and the pressure of the compression side chamber R2 by the control valve V and the switching valve 9 in that a differential pressure control valve DP1 having four ports and three positions is provided among the supply passage 5, the discharge passage 6, the extension side passage 7, and the compression side passage 8. Specifically, the liquid pressure circuit FC2 is different from the liquid pressure circuit FC1 in that the control passage 19, the control valve V, and the switching valve 9 are removed and the differential pressure control valve DP1 is provided at a position in which the switching valve 9 is provided. Since the other configurations of the liquid pressure circuit FC2 are the same as those of the liquid pressure circuit FC1, the same components are denoted by the same reference numerals in order to avoid a redundant description and a detailed description is omitted.

The differential pressure control valve DP1 is configured as an electromagnetic differential pressure control valve having four ports and three positions which includes four ports as a port A connected to the extension side passage 7, a port B connected to the compression side passage 8, a port P connected to the supply passage 5, and a port T connected to the discharge passage 6 and controls the differential pressure between the extension side passage 7 and the compression side passage 8.

Specifically, the differential pressure control valve includes an extension side supply position A1 in which the extension side passage 7 and the supply passage 5 communicate with each other and the compression side passage 8 and the discharge passage 6 communicate with each other, a neutral position N1 in which all ports communicate with each other so that the supply passage 5, the discharge passage 6, the extension side passage 7, and the compression side passage 8 communicate with one another, a compression side supply position B1 in which the extension side passage 7 and the discharge passage 6 communicate with each other and the compression side passage 8 and the supply passage 5 communicate with each other, a pair of springs Cs1 and Cs2 which urges a spool SP1 from both sides while interposing the spool therebetween, and a push-pull type solenoid Sol1 which drives the spool SP1. When the spool SP1 does not receive the thrust from the solenoid Sol1, the spool is positioned to a neutral position for selecting the neutral position N1 by the urging force generated by the springs Cs1 and Cs2. Additionally, the extension side supply position A1, the neutral position N1, and the compression side supply position B1 are switched continuously by the movement of the spool SP1.

Further, a pressure generated from the extension side passage 7 is led to one end side of the spool SP1 as a pilot pressure and the spool SP1 can be urged downward in Fig. 12 by the pressure of the extension side passage 7. Further, a pressure generated from the compression side passage 8 is led to the other end side of the spool SP1 as a pilot pressure and the spool SP1 can be urged upward in Fig. 12 by the pressure of the compression side passage 8. A force of pressing the spool SP1 downward in Fig. 12 by the pressure of the extension side passage 7 and a force of pressing the spool SP1 upward in Fig. 12 by the pressure of the compression side passage 8 are forces of pressing the spool SP1 in the opposite directions and the resultant force is used as a liquid pressure feedback force. When electric power is supplied to the solenoid Sol1, the spool SP1 is switched to a balance position of the thrust from the solenoid Sol1, the liquid pressure feedback force caused by the pressure of the extension side passage 7 and the compression side passage 8, and the urging force of the springs Cs1 and Cs2 between the positions A1 and B1. Since the balance position of the thrust, the liquid pressure feedback force, and the urging force of the springs Cs1 and Cs2 in the spool SP1 changes due to the magnitude of the thrust of the solenoid Sol1, the differential pressure between the extension side passage 7 and the compression side passage 8 can be controlled by the adjustment of the thrust of the solenoid Sol1. Meanwhile, when electric power is not supplied to the solenoid Sol1, the spool SP1 is urged by the springs Cs1 and Cs2 to select the neutral position N1 corresponding to the neutral position.

Thus, it is possible to control the differential pressure between the pressure of the extension side passage 7 and the pressure of the compression side passage 8 by adjusting the amount of the current supplied to the solenoid Sol1. Additionally, since the liquid flows into and out of the extension side chamber R1 and the compression side chamber R2 of the actuator AC when the actuator AC expands and contracts, the flow quantity passing through the differential pressure control valve DP1 increases and decreases by the amount of the flow quantity caused by the expansion and contraction of the actuator AC from the flow quantity of the pump. In this way, even when the flow quantity increases and decreases by the expansion and contraction of the actuator AC, the spool SP1 automatically moves by the liquid pressure feedback force and the differential pressure is controlled to the differential pressure uniquely determined by the amount of the current supplied to the solenoid Sol1.

In this case, the controller C may control the current supplied to the differential pressure control valve DP1 and the motor 13. Additionally, a controller may be provided separately from the controller C for the control of the differential pressure control valve DP1.

Additionally, the differential pressure between the pressure of the extension side passage 7 and the pressure of the compression side passage 8 can be appropriately controlled when the high pressure-side pressure is maintained to be higher than the reservoir pressure and the differential pressure is set to 0 in a state in which the flow quantity of the pump is insufficient or the pump 4 is stopped so that the liquid is not supplied from the reservoir R through the suction check valve 11.

The operation of the suspension device S2 with the above-described configuration will be described. Above all, an operation in a normal case in which the motor 13, the pump 4, and the differential pressure control valve DP1 can be operated normally will be described.

Basically, when the pump 4 is driven by the motor 13 and the differential pressure between the extension side chamber R1 and the compression side chamber R2 is controlled by the differential pressure control valve DP1, the actuator AC can serve as an actuator which actively expands or contracts. When the thrust generated by the actuator AC is in the extension direction of the actuator AC, the compression side chamber R2 is connected to the supply passage 5 and the extension side chamber R1 is connected to the reservoir R while the differential pressure control valve DP1 is located at the compression side supply position B1. In contrast, when the thrust generated by the actuator AC is in the compression direction of the actuator AC, the extension side chamber R1 is connected to the supply passage 5 and the compression side chamber R2 is connected to the reservoir R while the differential pressure control valve DP1 is located at the extension side supply position A1. Then, when the differential pressure between the extension side chamber R1 and the compression side chamber R2 is adjusted by the differential pressure control valve DP1, the extension direction of the actuator AC or the magnitude of the thrust in the compression direction can be controlled.

While the operation of actively expanding and contracting the actuator AC has been described, the actuator AC expands and contracts due to a disturbance caused by the unevenness of the road surface while the vehicle travels. Hereinafter, there operation based on the expansion and contraction of the actuator AC subjected to the disturbance will be described.

Four cases are supposed according to the thrust direction of the actuator AC and the expansion and contraction direction of the actuator AC when the actuator AC expands and contracts due to a disturbance. When the pressure of the port A is indicated by Pa and the pressure of the port B is indicated by Pb, as a first case, a case in which a pressure is controlled to have a relation of Pa > Pb, the thrust for pressing the piston 2 downward is exerted on the suspension device S2, and the actuator AC is operated to expand due to an external force will be described. The volume of the extension side chamber R1 decreases by the expansion of the actuator AC so that the liquid discharged from the extension side chamber R1 flows to the port A of the differential pressure control valve DP1 through the extension side damping valve 15. Meanwhile, the volume of the compression side chamber R2 expands due to the expansion of the actuator AC so that the rotation number of the pump 4 is controlled to the target rotation number Nref obtained as described above and the liquid is replenished to the compression side chamber R2 from the pump 4 through the compression side check valve 18 via the port B.

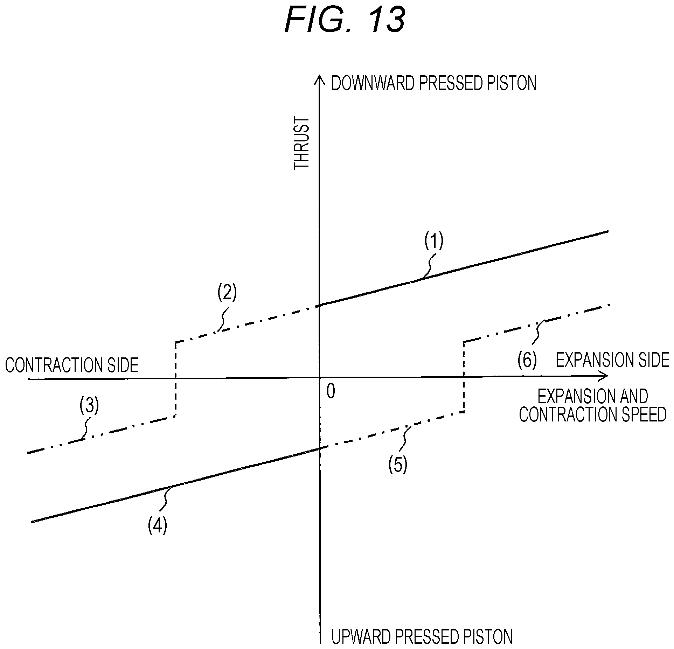

When the liquid flow quantity to be replenished to the compression side chamber R2 exceeds the discharge flow quantity of the pump 4 even when the expansion speed becomes faster and the rotation number of the pump 4 is controlled to the target rotation number Nref, the liquid is supplied from the reservoir R through the suction check valve 11. Since the differential pressure between the pressure Pa of the port A and the pressure Pb of the port B is maintained constantly by the differential pressure control valve DP1, the pressure of the extension side chamber R1 becomes higher than the pressure of the port A by the amount of the pressure loss generated in the extension side damping valve 15. Thus, the pressure of the extension side chamber R1 becomes higher than the pressure of the compression side chamber R2 by a value in which a pressure corresponding to the pressure loss generated in the extension side damping valve 15 is added to the differential pressure adjusted by the differential pressure control valve DP1 and the actuator AC exerts the thrust for suppressing the expansion. The characteristics of the expansion and contraction speed and the exerted thrust of the actuator at this time are obtained as characteristics indicated by the line (1) in Fig. 13 in a graph of Fig. 13 in which a vertical axis indicates the thrust of the actuator AC and a horizontal axis indicates the expansion and contraction speed of the actuator AC.

As a second case, a case in which a pressure is controlled to have a relation of Pa > Pb, the thrust for pressing the piston 2 downward is exerted on the suspension device S2, and the actuator AC is operated to contract due to an external force will be described. The volume of the compression side chamber R2 decreases by the contraction of the actuator AC so that the liquid discharged from the compression side chamber R2 passes through the compression side damping valve 17 and flows to the port B of the differential pressure control valve DP1. Meanwhile, the volume of the extension side chamber R1 expands due to the contraction of the actuator AC so that the rotation number of the pump 4 is controlled to the target rotation number Nref obtained as described above and the liquid is replenished to the extension side chamber R1 from the pump 4 through the extension side check valve 16 via the port A. Since the differential pressure between the pressure Pa of the port A and the pressure Pb of the port B is maintained constantly by the differential pressure control valve DP1, the pressure of the compression side chamber R2 becomes higher than the pressure of the port B by the amount of the pressure loss generated in the compression side damping valve 17. Thus, the pressure of the extension side chamber R1 becomes higher than the pressure of the compression side chamber R2 by a value obtained by subtracting a pressure of the pressure loss generated in the compression side damping valve 17 from the differential pressure adjusted by the differential pressure control valve DP1 and the actuator AC exerts the thrust for supporting the contraction. The characteristics of the expansion and contraction speed and the exerted thrust of the actuator at this time are obtained as characteristics indicated by the line (2) in Fig. 13.

Further, when the liquid flow quantity to be replenished to the extension side chamber R1 exceeds the maximum discharge flow quantity of the pump 4 even when the contraction speed be comes faster and the target rotation number Nref reaches the quadrant, the liquid is supplied from the reservoir R through the suction check valve 11. In such a state, the port A cannot be pressurized by the discharge flow quantity of the pump 4, the pressure Pa of the port A becomes slightly lower than the pressure of the reservoir R, and the differential pressure between the pressure Pa of the port A and the pressure Pb of the port B cannot be controlled by the differential pressure control valve DP1 so that the differential pressure therebetween becomes 0. Then, the actuator AC exerts the thrust by the differential pressure between the extension side chamber R1 and the compression side chamber R2 caused by the pressure loss generated when the liquid discharged from the compression side chamber R2 passes through the compression side damping valve 17. The characteristics of the expansion and contraction speed and the exerted thrust of the actuator at this time are obtained as characteristics indicated by the line (3) in Fig. 13 and are not continuous to the characteristics indicated by the line (2). In this way, when the liquid flow quantity to be replenished to the extension side chamber R1 exceeds the discharge flow quantity of the pump 4, the actuator AC serves as the passive damper and the thrust changes depending on the contraction speed.

Next, as a third case, a case in which a pressure is controlled to have a relation of Pb > Pa, the thrust for pressing the piston 2 upward is exerted on the suspension device S2, and the actuator AC is operated to contact due to an external force will be described. The volume of the compression side chamber R2 decreases due to the contraction of the actuator AC and the liquid discharged from the compression side chamber R2 passes through the compression side damping valve 17 and flows to the port B of the differential pressure control valve DP1. Meanwhile, the volume of the extension side chamber R1 expands due to the contraction of the actuator AC so that the rotation number of the pump 4 is controlled to the target rotation number Nref obtained as described above and the liquid is replenished to the extension side chamber R1 from the pump 4 through the extension side check valve 16 via the port A.

When the liquid flow quantity to be replenished to the extension side chamber R1 exceeds the discharge flow quantity of the pump 4 even when the expansion speed becomes faster and the rotation number of the pump 4 is controlled to the target rotation number Nref, the liquid is supplied from the reservoir R through the suction check valve 11. Since the differential pressure between the pressure Pa of the port A and the pressure Pb of the port B is maintained constantly by the differential pressure control valve DP1, the pressure of the compression side chamber R2 becomes higher than the pressure of the port B by the amount of the pressure loss generated in the compression side damping valve 17. Thus, since the pressure of the compression side chamber R2 becomes higher than the pressure of the extension side chamber R1 by a value obtained by adding a pressure of the pressure loss generated in the compression side damping valve 17 to the differential pressure adjusted by the differential pressure control valve DP1, the actuator AC exerts the thrust for suppressing the contraction. The characteristics of the expansion and contraction speed and the exerted thrust of the actuator at this time are obtained as characteristics indicated by the line (4) in Fig. 13.

As a fourth case, a case in which a pressure is controlled to have a relation of Pb > Pa, the thrust for pressing the piston 2 upward is exerted on the suspension device S2, and the actuator AC is operated to expand due to an external force will be described. The volume of the extension side chamber R1 decreases by the expansion of the actuator AC so that the liquid discharged from the extension side chamber R1 passes through the extension side damping valve 15 and flows to the port A of the differential pressure control valve DP1. Meanwhile, the volume of the compression side chamber R2 expands due to the expansion of the actuator AC so that the rotation number of the pump 4 is controlled to the target rotation number Nref obtained as described above and the liquid is replenished to the compression side chamber R2 from the pump 4 through the compression side check valve 18 via the port B. Since the differential pressure between the pressure Pa of the port A and the pressure Pb of the port B is maintained constantly by the differential pressure control valve DP1, the pressure of the extension side chamber R1 becomes higher than the pressure of the port A by the amount of the pressure loss generated by the extension side damping valve 15. Thus, the pressure of the compression side chamber R2 becomes higher than the pressure of the extension side chamber R1 by a value obtained by subtracting a pressure corresponding to the pressure loss generated in the extension side damping valve 15 from the differential pressure adjusted by the differential pressure control valve DP1 and the actuator AC exerts the thrust for supporting the expansion. The characteristics of the expansion and contraction speed and the exerted thrust of the actuator at this time are obtained as characteristics indicated by the line (5) in Fig. 13.

Further, when the liquid flow quantity to be replenished to the compression side chamber R2 exceeds the maximum discharge flow quantity of the pump 4 even when the expansion speed becomes faster and the target rotation number Nref reaches the quadrant, the liquid is supplied from the reservoir R through the suction check valve 11. In such a state, the port B cannot be pressurized by the discharge flow quantity of the pump 4, the pressure Pb of the port B becomes slightly lower than the pressure of the reservoir R, and the differential pressure between the pressure Pa of the port A and the pressure Pb of the port B cannot be controlled by the differential pressure control valve DP1 so that the differential pressure therebetween becomes 0. Then, the actuator AC exerts the thrust by the differential pressure between the extension side chamber R1 and the compression side chamber R2 caused by the pressure loss generated when the liquid discharged from the extension side chamber R1 passes through the extension side damping valve 15. The characteristics of the expansion and contraction speed and the exerted thrust of the actuator at this time are obtained as characteristics indicated by the line (6) in Fig. 13 and are not continuous to the characteristics indicated by the line (5). In this way, when the liquid flow quantity to be replenished to the compression side chamber R2 exceeds the discharge flow quantity of the pump 4, the actuator AC serves as a passive damper and the thrust changes depending on the expansion speed.

Additionally, the thrust of the actuator AC has characteristics changing from the line (2) to the line (3) in Fig. 13 at the contraction side and has characteristics changing from the line (5) to the line (6) in Fig. 13 at the extension side. However, since the characteristics change instantly, there is a little influence on the riding comfort.

As described above, the thrust of the actuator AC is changeable in the range from a line connected from the line (1) to the line (3) to a line connected from the line (4) to the line (6) in Fig. 13 by the differential pressure control using the differential pressure control valve DP1. Further, in a case in which the discharge flow quantity of the pump 4 is supplied to an extension side between the extension side chamber R1 and the compression side chamber R2 by the driving of the pump 4, when the discharge flow quantity of the pump 4 is the volume increased amount or more of the extended chamber, the actuator AC can exert the thrust in the same direction as the expansion and contraction direction.

Next, the operation of the suspension device S2 in a state in which the pump 4 is not driven and is stopped will be described. Alsointhiscase, four cases are supposed according to a direction in which the actuator AC expands and contracts due to a disturbance and a direction in which the thrust is generated by the actuator AC.

As a first case, a case in which a pressure is controlled to have a relation of Pa > Pb, the thrust for pressing the piston 2 downward is exerted on the suspension device S2, and the actuator AC is operated to expand due to an external force will be described. The volume of the extension side chamber R1 decreases by the expansion of the actuator AC so that the liquid discharged from the extension side chamber R1 flows to the port A of the differential pressure control valve DP1 through the extension side damping valve 15. Meanwhile, the volume of the compression side chamber R2 expands due to the expansion of the actuator AC so that the liquid is replenished to the compression side chamber R2 from the reservoir R through the compression side check valve 18 via the port B.

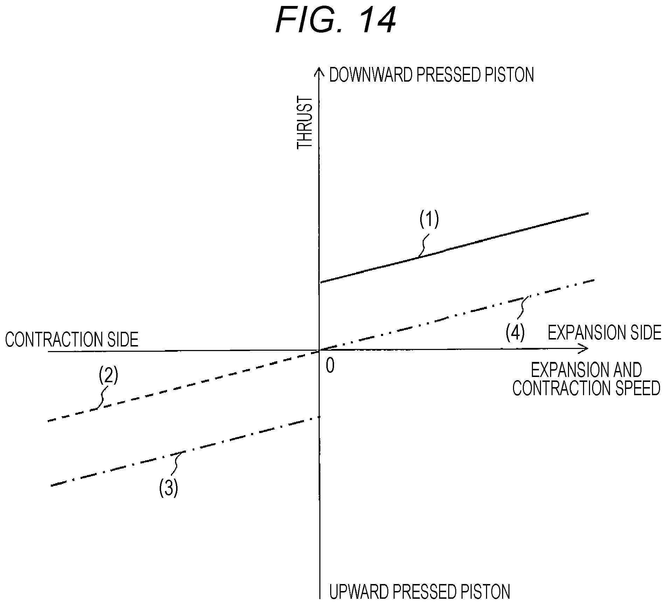

Since the differential pressure between the pressure Pa of the port A and the pressure Pb of the port B is maintained constantly by the differential pressure control valve DP1, the pressure of the extension side chamber R1 becomes higher than the pressure of the port A by the amount of the pressure loss generated in the extension side damping valve 15. Thus, the pressure of the extension side chamber R1 becomes higher than the pressure of the compression side chamber R2 by a value in which a pressure corresponding to the pressure loss generated in the extension side damping valve 15 is added to the differential pressure adjusted by the differential pressure control valve DP1 and the actuator AC exerts the thrust for suppressing the expansion. The characteristics of the expansion and contraction speed and the exerted thrust of the actuator at this time are obtained as characteristics indicated by the line (1) in Fig. 14 in a graph of Fig. 14 in which a vertical axis indicates the thrust of the actuator AC and a horizontal axis indicates the expansion and contraction speed of the actuator AC.

As a second case, a case in which a pressure is controlled to have a relation of Pa > Pb, the thrust for pressing the piston 2 downward is exerted on the suspension device S2, and the actuator AC is operated to contact due to an external force will be described. The volume of the compression side chamber R2 decreases by the contraction of the actuator AC so that the liquid discharged from the compression side chamber R2 passes through the compression side damping valve 17 and flows to the port B of the differential pressure control valve DP1. Meanwhile, the volume of the extension side chamber R1 expands due to the contraction of the actuator AC so that the liquid is replenished to the extension side chamber R1 from the reservoir R through the extension side check valve 16 via the suction check valve 11 and the port A. Since the pressure Pa of the port A becomes slightly lower than the pressure of the reservoir R, the differential pressure between the pressure Pa of the port A and the pressure Pb of the port B cannot be controlled by the differential pressure control valve DP1 so that the differential pressure therebetween becomes 0. Then, the actuator AC exerts the thrust by the differential pressure between the extension side chamber R1 and the compression side chamber R2 caused by the pressure loss generated when the liquid discharged from the compression side chamber R2 passes through the compression side damping valve 17. The characteristics of the expansion and contraction speed and the exerted thrust of the actuator at this time are obtained as characteristics indicated by the line (2) in Fig. 14.

Next, as a third case, a case in which a pressure is controlled to have a relation of Pb > Pa, the thrust for pressing the piston 2 upward is exerted on the suspension device S2, and the actuator AC is operated to contact due to an external force will be described. The volume of the compression side chamber R2 decreases by the contraction of the actuator AC so that the liquid discharged from the compression side chamber R2 passes through the compression side damping valve 17 and flows to the port B of the differential pressure control valve DP1. Meanwhile, the volume of the extension side chamber R1 expands due to the contraction of the actuator AC so that the liquid is replenished to the extension side chamber R1 from the reservoir R through the extension side check valve 16 via the port A.

Since the differential pressure between the pressure Pa of the port A and the pressure Pb of the port B is maintained constantly by the differential pressure control valve DP1, the pressure of the compression side chamber R2 becomes higher than the pressure of the port B by the amount of the pressure loss generated in the compression side damping valve 17. Thus, since the pressure of the compression side chamber R2 becomes higher than the pressure of the extension side chamber R1 by a value obtained by adding a pressure of the pressure loss generated in the compression side damping valve 17 to the differential pressure adjusted by the differential pressure control valve DP1, the actuator AC exerts the thrust for suppressing the contraction. The characteristics of the expansion and contraction speed and the exerted thrust of the actuator at this time are obtained as characteristics indicated by the line (3) in Fig. 14.

As a fourth case, a case in which a pressure is controlled to have a relation of Pb > Pa, the thrust for pressing the piston 2 upward is exerted on the suspension device S2, and the actuator AC is operated to expand due to an external force will be described. The volume of the extension side chamber R1 decreases by the expansion of the actuator AC so that the liquid discharged from the extension side chamber R1 flows to the port A of the differential pressure control valve DP1 through the extension side damping valve 15. Meanwhile, the volume of the compression side chamber R2 expands due to the expansion of the actuator AC so that the liquid is replenished to the compression side chamber R2 from the reservoir R through the compression side check valve 18 via the suction check valve 11 and the port B. The pressure Pb of the port B becomes slightly lower than the pressure of the reservoir R so that the differential pressure between the pressure Pa of the port A and the pressure Pb of the port B cannot be controlled by the differential pressure control valve DP1 and the differential pressure therebetween becomes 0. Then, the actuator AC exerts the thrust by the differential pressure between the extension side chamber R1 and the compression side chamber R2 caused by the pressure loss generated when the liquid discharged from the extension side chamber R1 passes through the extension side damping valve 15. The characteristics of the expansion and contraction speed and the exerted thrust of the actuator at this time are obtained as characteristics indicated by the line (4) in Fig. 14.

Thus, the thrust of the actuator AC is changeable in the range from the line (1) to the line (4) within the first quadrant and is changeable in the range from the line (3) to the line (2) within the third quadrant in Fig. 14 by the differential pressure control of the differential pressure control valve DP1 in a state in which the pump 4 is stopped.

Further, when the actuator AC is operated to contract due to anexternal force at the time of exerting the thrust for pressing the piston 2 downward on the suspension device S2 in a state in which the pump 4 is stopped, the thrust of the actuator AC has characteristics indicated by the line (2) in Fig. 14 regardless of the differential pressure control of the differential pressure control valve DP1. This has the same effect as the case of controlling the compression side damping force to the lowest damping force in the damping force variable damper. Further, when the actuator AC is operated to expand due to an external force at the time of exerting the thrust for pressing the piston 2 upward on the suspension device S2 in a state in which the pump 4 is stopped, the thrust of the actuator AC has characteristics indicated by the line (4) in Fig. 14 regardless of the differential pressure control of the differential pressure control valve DP1. This has the same effect as the case of controlling the extension side damping force to the lowest damping force in the damping force variable damper.

In the suspension device S2 of the present invention, when the actuator AC exerts the thrust for pressing the piston 2 downward while the pump 4 is stopped, the thrust of the actuator AC is controlled within the available output range by the differential pressure control valve DP1 at the time of performing the expansion operation and the actuator AC exerts the lowest thrust at the time of performing the contraction operation. In contrast, in the suspension device S2 of the present invention, when the actuator AC exerts the thrust for pressing the piston 2 upward while the pump 4 is stopped, the thrust of the actuator AC is controlled within the available output range by the differential pressure control valve DP1 at the time of performing the contraction operation and the actuator AC exerts the lowest thrust at the time of performing the expansion operation. Thus, the suspension device S2 of the present invention can automatically exert the same function as the semi-active suspension when the pump 4 is stopped. Accordingly, when the discharge flow quantity of the pump 4 becomes smaller than the volume increased amount of the extension side chamber R1 or the compression side chamber R2 to be extended even when the pump 4 is driven, the suspension device S2 can automatically serve as the semi-active suspension.

Finally, the operation of the suspension device S2 when the motor 13 and the differential pressure control valve DP1 of the suspension device S2 are deactivated due to some abnormality will be described. Such failure includes, for example, a case of stopping the supply of electric power to the motor 13 and the differential pressure control valve DP1 when no abnormality is found in the controller C or the driver Dr in addition to a case in which electric power cannot be supplied to the motor 13 and the differential pressure control valve DP1.

At the time of failure, the supply of electric power to the motor 13 and the differential pressure control valve DP1 is stopped or electric power cannot be supplied thereto.

Accordingly, the pump 4 is stopped and the differential pressure control valve DP1 is urged by the springs Cs1 and Cs2 to select the neutral position N1. In the detailed differential pressure control valve DP1, the neutral position N1 is selected by the urging of the springs Cs1 and Cs2.

Since the volume of the extension side chamber R1 decreases when the actuator AC is operated to expand due to an external force in this state, the liquid corresponding to the decreased amount is discharged from the extension side chamber R1 through the extension side damping valve 15. The liquid is replenished from the extension side chamber R1 and the reservoir R to the compression side chamber R2 increasing in volume.

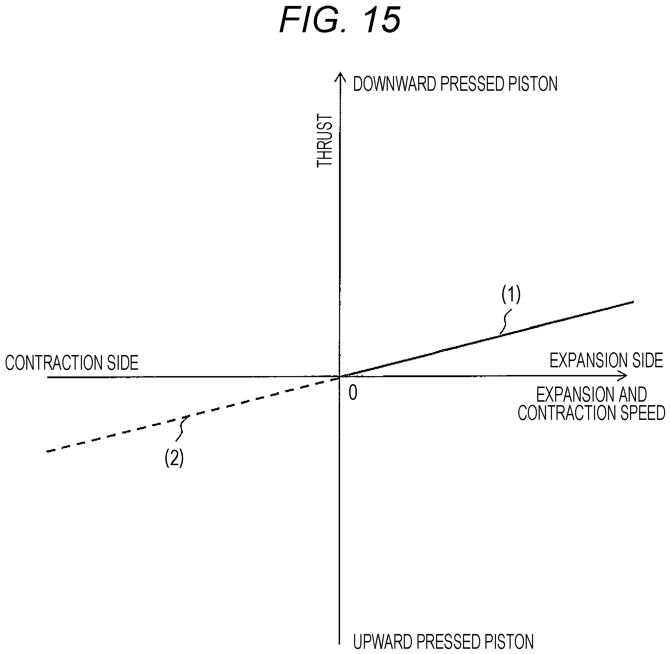

Thus, since the pressure of the extension side chamber R1 becomes higher than the pressure of the compression side chamber R2 by the pressure loss generated when the liquid discharged from the extension side chamber R1 passes through the extension side damping valve 15, the actuator AC exert the thrust by the differential pressure between the extension side chamber R1 and the compression side chamber R2. The characteristics of the expansion and contraction speed of the actuator and the exerted thrust are obtained as characteristics indicated by the line (1) in Fig. 15.

In contrast, since the volume of the compression side chamber R2 decreases when the actuator AC is operated to contract due to an external force, the liquid corresponding to the decreased amount is discharged from the compression side chamber R2 through the compression side damping valve 17. The liquid is replenished from the compression side chamber R2 and the reservoir R to the extension side chamber R1 increasing in volume .

Thus, since the pressure of the compression side chamber R2 becomes higher than the pressure of the extension side chamber R1 by the amount of the pressure loss generated when the liquid discharged from the compression side chamber R2 passes through the compression side damping valve 17, the actuator AC exerts the thrust by the differential pressure between the extension side chamber R1 and the compression side chamber R2. The characteristics of the expansion and contraction speed and the exerted thrust of the actuator at this time are obtained as characteristics indicated by the line (2) in Fig. 15.

In a state in which the suspension device S2 has failed as described above, since the actuator AC serves as the passive damper to suppress the vibration of the vehicle body B and the vehicle wheel W, the fail-safe operation is reliably performed at the time of failure.

In this way, in the suspension device S2 of the present invention, the actuator AC is made to actively expand and contract so that the actuator serves as the active suspension. Further, since the driving of the pump 4 is not essential in a situation in which the thrust needs to be exerted as the semi-active suspension, the pump 4 may be driven only when the driving is necessary and thus energy consumption is reduced. Thus, the suspension device S2 of the present invention can serve as the active suspension and can reduce energy consumption.

Then, in the suspension device S2 of the present invention, since the thrust of the actuator AC can be controlled only by the differential pressure control valve DP1, not only the cost of the whole device low, but also the arrangement of the piping of the liquid pressure circuit can be simplified compared to the suspension device S1 of the first embodiment requiring two electromagnetic valves.

Further, in the suspension device S2, since one differential pressure control valve DP1 serving as the active suspension and provided with the solenoid is provided, the fail-safe operation can be performed at the time of failure.

Further, the suspension device S2 of this embodiment includes the extension side damping valve 15 which gives a resistance to the flow from the extension side chamber R1 toward the differential pressure control valve DP1, the extension side check valve 16 which is disposed in parallel to the extension side damping valve 15 and allows only the flow from the differential pressure control valve DP1 toward the extension side chamber R1, the compression side damping valve 17 which gives a resistance to the flow from the compression side chamber R2 toward the differential pressure control valve DP1, and the compression side check valve 18 which is disposed in parallel to the compression side damping valve 17 and allows only the flow from the differential pressure control valve DP1 toward the compression side chamber R2. Thus, since it is possible to supply the liquid to the extension side chamber R1 or the compression side chamber R2 substantially without any resistance through the extension side check valve 16 or the compression side check valve 18 when supplying the liquid from the pump 4 to the extension side chamber R1 or the compression side chamber R2, it is possible to reduce the load of the pump 4 when the expansion and contraction direction of the actuator AC matches the direction of the generated thrust. Further, since a resistance is given to the flow of the liquid passing through the extension side damping valve 15 or the compression side damping valve 17 when the liquid is discharged from the extension side chamber R1 or the compression side chamber R2, large thrust can be obtained by setting the differential pressure between the extension side chamber R1 and the compression side chamber R2 to the differential pressure or more set by the differential pressure control valve DP1. Thus, the suspension device S2 can generate large thrust even when the thrust of the solenoid Sol1 of the differential pressure control valve DP1 is set to be small. Thus, the differential pressure control valve DP1 can be decreased in size and cost. Additionally, the extension side damping valve 15 and the compression side damping valve 17 may give a resistance to the flow of the liquid regardless of the liquid flow direction. Then, when the extension side damping valve 15 and the compression side damping valve 17 allows a bidirectional flow, the extension side check valve 16 and the compression side check valve 18 can be omitted.

### <Third Embodiment>

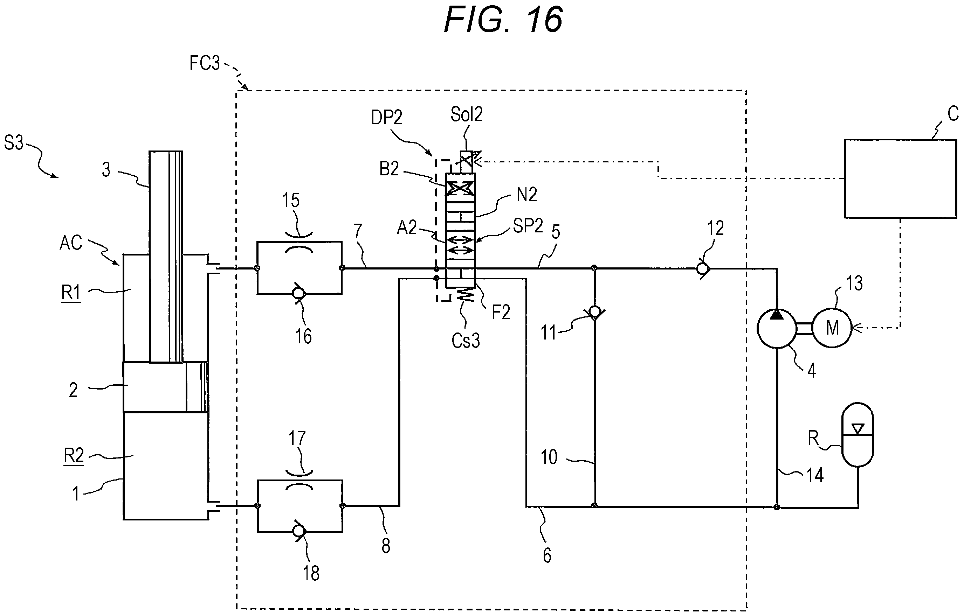

Still another detailed configuration example of a suspension device including a liquid pressure circuit will be described. A suspension device S3 of a third embodiment includes a liquid pressure circuit FC3 illustrated in Fig. 16.

As illustrated in Fig. 16, the liquid pressure circuit FC3 is different in that the differential pressure control valve DP1 of the liquid pressure circuit FC2 is changed to a differential pressure control valve DP2 having four ports and four positions . Since the other configurations of the liquid pressure circuit FC3 are the same as those of the liquid pressure circuit FC2, the same components are denoted by the same reference numerals in order to avoid a redundant description and a detailed description is omitted.

The differential pressure control valve DP2 is configured as an electromagnetic differential pressure control valve having four ports and four positions which includes four ports as a port A connected to the extension side passage 7, a port B connected to the compression side passage 8, a port P connected to the supply passage 5, and a port T connected to the discharge passage 6, controls the differential pressure between the port A and the port B, and selects a fail position in which the extension side passage 7, the compression side passage 8, the supply passage 5, and the discharge passage 6 communicate with one another when no electric power is supplied thereto.

Specifically, the differential pressure control valve includes a spool SP2 which includes an extension side supply position A2 in which the port A and the port P communicate with each other and the port B and the port T communicate with each other, a neutral position N2 in which all ports of the port A, the port B, the port P, and the port T communicate with one another, a compression side supply position B2 in which the port A and the port T communicate with each other and the port B and the port P communicate with each other, and a fail position F2 in which all ports communicate with each other, a spring Cs3 which urges the spool SP2, and a solenoid Sol2 which faces the spring Cs3 and gives thrust to the spool SP2. That is, at the extension side supply position A2, the supply passage 5 communicates with the extension side passage 7 and the discharge passage 6 communicates with the compression side passage 8. Then, at the neutral position N2 and the fail position F2, the supply passage 5, the discharge passage 6, the extension side passage 7, and the compression side passage 8 communicate with one another. Then, at the compression side supply position B2, the supply passage 5 communicates with the compression side passage 8 and the discharge passage 6 communicates with the extension side passage 7. Additionally, the extension side supply position A2, the neutral position N2, and the compression side supply position B2 are continuously switched by the movement of the spool SP2.

Further, a pressure generated from the extension side passage 7 is led to one end side of the spool SP2 as a pilot pressure and the spool SP2 can be urged downward in Fig. 16 by the pressure of the extension side passage 7. Further, a pressure generated from the compression side passage 8 is led to the other end side of the spool SP2 as a pilot pressure and the spool SP2 can be urged upward in Fig. 16 by the pressure of the compression side passage 8. A force of pressing the spool SP2 downward in Fig. 16 by the pressure of the extension side passage 7 and a force of pressing the spool SP2 upward in Fig. 16 by the pressure of the compression side passage 8 are forces of pressing the spool SP2 in the opposite directions and the resultant force is used as a fluid pressure feedback force. When electric power is supplied to the solenoid Sol2, the spool SP2 is switched to a balance position of the thrust from the solenoid Sol2, the fluid pressure feedback force caused by the pressure of the extension side passage 7 and the compression side passage 8, and the urging force of the spring Cs3 among the positions A2, B2, and N2. Since the balance position of the thrust, the fluid pressure feedback force, and the urging force of the spring Cs3 in the spool SP2 changes due to the magnitude of the thrust of the solenoid Sol, the differential pressure between the extension side passage 7 and the compression side passage 8 can be controlled by the adjustment of the thrust of the solenoid Sol2. Meanwhile, when electric power is not supplied to the solenoid Sol2, the spool SP2 is pressed by the spring Cs3 to select the fail position F2. Additionally, in this example, the extension side passage 7 is connected to the port A and the compression side passage 8 is connected to the port B. However, the extension side passage 7 may be connected to the port B and the compression side passage 8 may be connected to the port A.

Thus, it is possible to control the differential pressure between the pressure of the extension side passage 7 and the pressure of the compression side passage 8 by adjusting the amount of the current supplied to the solenoid Sol2. Additionally, since the liquid flows into and out of the extension side chamber R1 and the compression side chamber R2 of the actuator AC when the actuator AC expands and contracts, the flow quantity passing through the differential pressure control valve DP2 increases and decreases by the amount of the flow quantity caused by the expansion and contraction of the actuator AC from the flow quantity of the pump. In this way, even when the flow quantity increases and decreases by the expansion and contraction of the actuator AC, the spool SP2 automatically moves by the fluid pressure feedback force and the differential pressure is controlled to the differential pressure uniquely determined by the amount of the current supplied to the solenoid Sol2.

Additionally, the differential pressure between the pressure of the extension side passage 7 and the pressure of the compression side passage 8 can be appropriately controlled when the high pressure-side pressure is maintained to be higher than the reservoir pressure and the differential pressure is set to 0 in a state in which the flow quantity of the pump is insufficient or the pump 4 is stopped so that the liquid is not supplied from the reservoir R through the suction check valve 11.

The suspension device S3 has the above-described configuration and can control the thrust of the actuator AC by the differential pressure control valve DP2 similarly to the suspension device S2 with the liquidpressure circuit FC2. Thus, when the suspension device S3 drives the pump 4 by the motor 13 and controls the differential pressure between the extension side chamber R1 and the compression side chamber R2 by the differential pressure control valve DP2 similarly to the suspension device S2, the actuator AC can serve as an actuator which actively expands or contracts. When the thrust generated by the actuator AC is in the extension direction of the actuator AC, the compression side chamber R2 is connected to the supply passage 5 and the extension side chamber R1 is connected to the reservoir R while the differential pressure control valve DP2 is located at the compression side supply position B2. In contrast, when the thrust generated by the actuator AC is in the compression direction of the actuator AC, the extension side chamber R1 is connected to the supply passage 5 and the compression side chamber R2 is connected to the reservoir R while the differential pressure control valve DP2 is located at the extension side supply position A2. Then, when the differential pressure between the extension side chamber R1 and the compression side chamber R2 is adjusted by the differential pressure control valve DP2, the extension direction of the actuator AC or the magnitude of the thrust in the compression direction can be controlled.

Further, the suspension device S3 has the same operation as that of the suspension device S2 when the actuator AC expands or contracts due to the unevenness of the road surface while the vehicle travels . That is, the characteristics of the thrust for the expansion and contraction speed of the actuator AC in the suspension device S3 has characteristics from the line (1) to the line (6) illustrated in Fig. 13 similarly to the suspension device S2. Thus, also in the suspension device S3, the thrust of the actuator AC is changeable in the range from a line connected from the line (1) to the line (3) to a line connected from the line (4) to the line (6). Further, in a case in which the discharge flow quantity of the pump 4 is supplied to an extension side between the extension side chamber R1 and the compression side chamber R2 by the driving of the pump 4, when the discharge flow quantity of the pump 4 is the volume increased amount or more of the extended chamber, the actuator AC can exert the thrust in the same direction as the expansion and contraction direction.

Further, the suspension device S3 has the same operation as that of the suspension device S2 also in the operation when the pump 4 is not driven and is stopped. That is, the characteristics of the thrust for the expansion and contraction speed of the actuator AC in the suspension device S3 are obtained as characteristics of the line (1) to the line (4) illustrated in Fig. 14 similarly to the suspension device S2. Thus, also in the suspension device S3, when the pump 4 is stopped, the thrust of the actuator AC is changeable in the range from the line (1) to the line (4) within the first quadrant in Fig. 14 and is changeable in the range from the line (3) to the line (2) within the third quadrant in Fig. 14 by the differential pressure control using the differential pressure control valve DP2.

Additionally, the differential pressure control valve DP2 of the liquid pressure circuit FC3 of the suspension device S3 includes the fail position F2 other than the neutral position N2 differently from the differential pressure control valve DP1 of the liquid pressure circuit FC2. At the fail position F2, the supply passage 5, the discharge passage 6, the extension side passage 7, and the compression side passage 8 communicate with one another similarly to the neutral position N of the differential pressure control valve DP1. Thus, the suspension device S3 also has the same operation as that of the suspension device S2 at the time of failure. That is, the characteristics of the thrust for the expansion and contraction speed of the actuator AC in the suspension device S3 are obtained as characteristics indicated by the line (1) and the line (2) illustrated in Fig. 15 similarly to the suspension device S2. Thus, also in the suspension device S3, since the actuator AC serves as the passive damper to suppress the vibration of the vehicle body B and the vehicle wheel W at the time of failure, the fail-safe operation is reliably performed.

In this way, in the suspension device S3 of the present invention, the actuator AC is made to actively expand and contract so that the actuator serves as the active suspension. Further, since the driving of the pump 4 is not essential in a situation in which the thrust needs to be exerted as the semi-active suspension, the pump 4 may be driven only when the driving is necessary and thus energy consumption is reduced. Thus, the suspension device S3 of the present invention can serve as the active suspension and can reduce energy consumption.

Then, in the suspension device S3 of the present invention, since the thrust of the actuator AC can be controlled only by the differential pressure control valve DP2, not only the cost of the whole device low, but also the arrangement of the piping of the fluid pressure circuit can be simplified compared to the suspension device S1 requiring two electromagnetic valves.

Further, in the suspension device S3, since one differential pressure control valve DP2 serving as the active suspension and provided with the solenoid is provided, the fail-safe operation can be performed at the time of failure.

In addition, also in the driver Dr for driving the differential pressure control valve DP2, since it is sufficient only by the driving circuit for driving the solenoid Sol2, the number of the driving circuits of the driver Dr may be small compared to the conventional suspension device requiring two electromagnetic valves. Thus, the driver Dr for driving the suspension device S3 also decreases in cost.

Further, the suspension device S3 of this embodiment includes the extension side damping valve 15 which gives a resistance to the flow from the extension side chamber R1 toward the differential pressure control valve DP2, the extension side check valve 16 which is disposed in parallel to the extension side damping valve 15 and allows only the flow from the differential pressure control valve DP2 toward the extension side chamber R1, the compression side damping valve 17 which gives a resistance to the flow from the compression side chamber R2 toward the differential pressure control valve DP2, and the compression side check valve 18 which is disposed in parallel to the compression side damping valve 17 and allows only the flow from the differential pressure control valve DP2 toward the compression side chamber R2. Thus, since it is possible to supply the fluid to the extension side chamber R1 or the compression side chamber R2 substantially without any resistance through the extension side check valve 16 or the compression side check valve 18 when supplying the fluid from the pump 4 to the extension side chamber R1 or the compression side chamber R2 and to reduce the load of the pump 4 when the expansion and contraction direction of the actuator AC matches the direction of the generated thrust. Further, since a resistance is given to the flow of the fluid passing through the extension side damping valve 15 or the compression side damping valve 17 when the fluid is discharged from the extension side chamber R1 or the compression side chamber R2, large thrust can be obtained by setting the differential pressure between the extension side chamber R1 and the compression side chamber R2 to the differential pressure or more set by the differential pressure control valve DP2. Thus, the suspension device S3 can generate large thrust even when the thrust of the solenoid Sol2 of the differential pressure control valve DP2 is set to be small. Thus, the differential pressure control valve DP2 can be decreased in size and cost. Additionally, the extension side damping valve 15 or the compression side damping valve 17 may give a resistance to the flow of the fluid regardless of the fluid flow direction. Then, as long as the extension side damping valve 15 and the compression side damping valve 17 allows the bidirectional flow, the extension side check valve 16 and the compression side check valve 18 can be omitted.

While the preferred embodiments of the present invention have been described in detail, the present invention can be improved, modified, and changed without departing from the scope of the claims.

This application claims priority based on Japanese Patent Application No. 2015-226992 filed on November 19, 2015, the Japan Patent Office, the entire contents of this application being incorporated herein by reference.

## Claims

1. A suspension device comprising:
an actuator which is movable in a telescopic manner;
a pump;
a liquid pressure circuit which is provided between the actuator and the pump and supplies a liquid discharged from the pump to the actuator so that the actuator expands and contracts; and
a controller which controls the driving of the pump,
wherein the controller includes a preview sensor which is provided in a vehicle and detects displacement of a road surface in front of the vehicle, a road surface condition index acquisition unit which obtains a road surface condition index corresponding to a measure of roughness of the road surface on the basis of the road surface displacement in front of the vehicle detected by the preview sensor, and a target rotation number determination unit which determines a target rotation number of the pump on the basis of the road surface condition index.

2. The suspension device according to claim 1,
wherein the controller includes a preview position determination unit which determines a distance from the road surface in front of the vehicle detected by the preview sensor to a vehicle wheel of the vehicle on the basis of a vehicle speed.

3. The suspension device according to claim 2,
wherein the preview position determination unit obtains the distance by multiplying the vehicle speed by a value obtained by adding a sampling time of the road surface displacement and a response delay time of the pump.

4. The suspension device according to claim 1,
wherein the controller includes a minimum rotation number regulation unit which sets a necessary minimum rotation number to a specified value exceeding 0 when a lateral acceleration of a vehicle body of the vehicle exceeds a lateral acceleration threshold value or a longitudinal acceleration of the vehicle body of the vehicle exceeds a longitudinal acceleration threshold value, and
wherein the target rotation number determination unit obtains the target rotation number by adding an additional rotation number obtained on the basis of the road surface condition index to the necessary minimum rotation number.

5. The suspension device according to claim 4,
wherein the minimum rotation number regulation unit sets the necessary minimum rotation number of the pump to 0 when the lateral acceleration of the vehicle body of the vehicle is the lateral acceleration threshold value or less and the longitudinal acceleration of the vehicle body of the vehicle is the longitudinal acceleration threshold value or less.

6. The suspension device according to claim 1,
wherein the controller includes a pump stop determination unit which sets the target rotation number of the pump to 0 when the vehicle speed is a speed threshold value or less.

7. The suspension device according to claim 1, further comprising:
a reservoir,
wherein the actuator includes a cylinder, a piston movably inserted into the cylinder and defining the inside of the cylinder into an extension side chamber and a compression side chamber, and a rod movably inserted into the cylinder and connected to the piston, and
wherein the liquid pressure circuit includes a supply passage connected to a discharge side of the pump, a discharge passage connected to the reservoir, an extension side passage connected to the extension side chamber, a compression side passage connected to the compression side chamber, an extension side damping valve provided in the extension side passage, a compression side damping valve provided in the compression side passage, a switching valve selectively connecting one of the extension side passage and the compression side passage to the supply passage and connecting the other of the extension side passage and the compression side passage to the discharge passage, a control valve capable of adjusting a pressure of the supply passage in response to a supply current, a suction passage connecting the supply passage and the discharge passage, a suction check valve provided in the course of the suction passage and allowing only the flow of the liquid from the discharge passage toward the supply passage, and a supply side check valve provided between the control valve and the pump in the course of the supply passage and allowing only the flow from the pump toward the control valve.

8. The suspension device according to claim 1, further comprising:
a reservoir,
wherein the actuator includes a cylinder, a piston movably inserted into the cylinder and defining the inside of the cylinder into an extension side chamber and a compression side chamber, and a rod movably inserted into the cylinder and connected to the piston, and
wherein the liquid pressure circuit includes a supply passage connected to a discharge side of the pump, a discharge passage connected to the reservoir, an extension side passage connected to the extension side chamber, a compression side passage connected to the compression side chamber, an extension side damping valve provided in the extension side passage, a compression side damping valve provided in the compression side passage, a differential pressure control valve provided among the supply passage, the discharge passage, the extension side passage, and the compression side passage and controlling a differential pressure between the extension side passage and the compression side passage, a supply side check valve provided between the differential pressure control valve and the pump in the course of the supply passage and allowing only the flow from the pump toward the differential pressure control valve, a suction passage connecting the discharge passage to a position between the differential pressure control valve and the supply side check valve in the course of the supply passage, and a suction check valve provided in the course of the suction passage and allowing only the flow of the liquid from the discharge passage toward the supply passage.

9. The suspension device according to claim 8,
wherein the differential pressure control valve includes a spool having three positions as an extension side supply position in which the extension side passage is connected to the supply passage and the compression side passage is connected to the discharge passage, a neutral position in which the extension side passage, the compression side passage, the supply passage, and the discharge passage communicate with one another, and a compression side supply position in which the compression side passage is connected to the supply passage and the extension side passage is connected to the discharge passage, a push-pull type solenoid driving the spool, and a pair of springs urging the spool to be positioned to the neutral position.

10. The suspension device according to claim 8,
wherein the differential pressure control valve includes a spool having four positions as an extension side supply position in which the extension side passage is connected to the supply passage and the compression side passage is connected to the discharge passage, a neutral position in which the extension side passage, the compression side passage, the supply passage, and the discharge passage communicate with one another, a compression side supply position in which the compression side passage is connected to the supply passage and the extension side passage is connected to the discharge passage, and a fail position in which the extension side passage, the compression side passage, the supply passage, and the discharge passage communicate with one another, a solenoid driving the spool, and a spring urging the spool so that the spool is positioned to the fail position when no electric power is supplied to the solenoid.

11. The suspension device according to claim 7,
wherein the liquid pressure circuit includes an extension side check valve provided in the extension side passage in parallel to the extension side damping valve and allowing only the flow from the switching valve or the differential pressure control valve toward the extension side chamber and a compression side check valve provided in the compression side passage in parallel to the compression side damping valve and allowing only the flow from the switching valve or the differential pressure control valve toward the compression side chamber.
